# EUROPEAN PATENT APPLICATION

(11) **EP 4 570 451 A1**
(43) Date of publication of application: **18.06.2025**
(21) Application number: 23892789.1
(22) Date of filing: 18.12.2023
(51) Int. Cl.: B25J 9/16, B23P 19/00, G05B 19/418, H01M 10/04, B25J 9/00, B23P 21/00, G06Q 10/08

(54) **TROLLEY CHANGEOVER CONTROL METHOD AND TROLLEY CHANGEOVER SYSTEM**

(30) Priority: 10.10.2023 CN 202311303894
(71) Applicant: Contemporary Amperex Technology (Hong Kong) Limited, Central, Central And Western District (HK)
(72) Inventor: WU, Kai, Ningde, Fujian 352100 (CN); XIE, Yuming, Ningde, Fujian 352100 (CN); QIU, Shiping, Ningde, Fujian 352100 (CN); GONG, Xueqing, Ningde, Fujian 352100 (CN); CHEN, Fanke, Ningde, Fujian 352100 (CN); SUN, Zhiqiang, Ningde, Fujian 352100 (CN)
(74) Representative: Gong, Jinping
(86) International application number: PCT/CN2023/139613
(87) International publication number: WO 2025/077004

(57) **Abstract**

A cart remodeling control method and system are disclosed in the present disclosure. The method includes: acquiring, when a cart to be tested reaches a preset position, current blueprint information of the cart to be tested; receiving target blueprint information sent by a manufacturing execution system, and matching the current blueprint information with the target blueprint information for consistency; controlling, when the current blueprint information is inconsistent with the target blueprint information, a jacking mechanism to perform positioning and jacking actions on the cart to be tested, and then sending a control instruction to a robot; wherein the control instruction is used for controlling a gripper mechanism arranged on the robot to perform a pick-and-place action on at least one position-limiting block on the tray; and determining, when a position of the at least one position-limiting block matches a position-limiting block position in the target blueprint information, that remodeling of the cart to be tested is successful, and controlling the jacking mechanism to perform a releasing action to release the cart to be tested. Therefore, not only labor costs and production costs can be reduced, but also the production efficiency during product remodeling can be improved.

## Description

### Cross-Reference to Related Application

The present disclosure is filed based on and claims priority to Chinese Patent Application No. 202311303894.7, entitled "CART REMODELING CONTROL METHOD AND SYSTEM" and filed on October 10, 2023, which is incorporated herein by reference in its entirety.

### Technical Field

The present disclosure relates to the field of automatic assembly technologies, and in particular to a cart remodeling control method and system.

### Background

With the continuous development of energy storage technologies, there are increasingly more types of power batteries, and compatibility requirements for production lines are also getting increasingly higher. A battery production line mainly uses semi-automatic devices for implementing processes such as battery processing, assembling, conveying, and testing.

In related technologies, transfer apparatuses are used in the battery production line to transfer battery components from the previous process to the next process for assembling. However, each transfer apparatus is only capable of adapting to battery components of one specification and size, and cannot automatically be compatible with products in different sizes. When the product is remodeled, the transfer apparatus needs to be manually replaced, resulting in a low production efficiency.

### Summary of the Invention

The present disclosure proposes a cart remodeling control method and system, which can reduce labor costs and production costs, and further help improve the production efficiency during product remodeling.

The technical solution of the present disclosure is implemented as follows:
In a first aspect, embodiments of the present disclosure provide a cart remodeling control method, and the method includes:
acquiring, when a cart to be tested reaches a preset position, current blueprint information of the cart to be tested; wherein a tray is placed on an upper surface of the cart to be tested, and at least one position-limiting block is arranged on the tray;
receiving target blueprint information sent by a manufacturing execution system, and matching the current blueprint information with the target blueprint information for consistency;
controlling, when the current blueprint information is inconsistent with the target blueprint information, a jacking mechanism to perform positioning and jacking actions on the cart to be tested, and then sending a control instruction to a robot; wherein the control instruction is used for controlling a gripper mechanism arranged on the robot to perform a pick-and-place action on at least one position-limiting block on the tray; and
determining, when a position of the at least one position-limiting block matches a position-limiting block position in the target blueprint information, that remodeling of the cart to be tested is successful, and controlling the jacking mechanism to perform a releasing action to release the cart to be tested.

Through the above technical means, when the cart to be tested reaches the preset position, the current blueprint information of the cart to be tested is matched with the target blueprint information for consistency; if the current blueprint information is inconsistent with the target blueprint information, it is determined to perform remodeling automatically for the cart to be tested, specifically: first, control the jacking mechanism to perform positioning and jacking actions on the cart to be tested, and then send the control instruction to the robot to control the gripper mechanism arranged on the robot to perform the pick-and-place action on the at least one position-limiting block on the tray; and when the position of the at least one position-limiting block matches the position-limiting block position in the target blueprint information, determine that the remodeling of the cart to be tested is successful. In this way, not only corresponding target blueprint information can be automatically selected according to components to be transferred with different specifications and parameters, thereby improving the data security; but also in a product matching process, the position-limiting block has been changed from manual replacement to automatic replacement, and the robot is simple in a remodeling logic, there is no need to configure a plurality of sensors, and it further improves the degree of automation of the devices, while reducing the labor costs and production costs, thereby improving the production efficiency during product matching. In addition, performing the pick-and-place action on the at least one position-limiting block on the tray is also capable of enabling it to adapt to components to be transferred with different specifications and parameters, thereby improving the compatibility.

In some embodiments, before the cart to be tested reaches the preset position, the method further includes: receiving an entry request sent by an automated guided vehicle; sending, based on the entry request, an entry permit instruction to the automated guided vehicle; wherein the entry permit instruction is used for instructing the automated guided vehicle to pull the cart to be tested to move until the cart to be tested reaches the preset position.

Through the above technical means, when the automated guided vehicle pulls the cart to be tested to move, according to the entry request sent by the automated guided vehicle, the cart to be tested is capable of being moved to a remodeling station, so as to control the cart to be tested to perform automatic remodeling.

In some embodiments, before sending the control instruction to the robot, the method further includes: receiving a position-limiting block position fed back by the robot; sending the control instruction to the robot if the position-limiting block position fed back by the robot is consistent with the position-limiting block position in the target blueprint information; wherein the position-limiting block position indicates a hole site serial number corresponding to the position-limiting block to be picked and placed by the robot.

Through the above technical means, before the robot performs the pick-and-place action, the robot first feeds back to the controller a current hole site serial number to be picked, and then performs consistency calibration. Only when the two are consistent, the controller sends the control instruction to the robot, which can play a role in error-proofing and fool-proofing of the position-limiting block position, thereby preventing the robot from picking a position-limiting block with the wrong hole site serial number.

In some embodiments, sending the control instruction to the robot includes: sending a photographing instruction to the robot, wherein the photographing instruction is used for controlling a visual detection system arranged on the robot to take photographs of a site to be picked and a site to be placed, and performing offset compensation on positions of the site to be picked and the site to be placed; and sending a pick-and-place instruction to the robot, wherein the pick-and-place instruction is used for controlling the gripper mechanism to pick the position-limiting block on the tray from the site to be picked, and controlling the gripper mechanism to place the position-limiting block into the site to be placed in the tray, so that the position of at least one position-limiting block conforms to the corresponding position-limiting block position in the target blueprint information.

Through the above technical means, since the robot is provided with the gripper mechanism and the visual detection system, the controller can control the visual detection system to perform visual guide for offset correction on the picking position, and is capable of accurately determining, according to the corresponding offset data, a target position that the gripper assembly in the gripper mechanism intends to reach, so that according to the determined target position, the controller can control the gripper assembly to move to the target position, and therefore, the gripper assembly can move to the accurate picking position to perform pick-and-place on the position-limiting block, thereby improving the efficiency of position-limiting block replacement or position adjustment.

In some embodiments, after determining that the remodeling of the cart to be tested is successful, the method further includes: writing the target blueprint information to an electronic tag on the cart to be tested through a reader/writer; reading, through the reader/writer, newly written blueprint information of the electronic tag; and allowing the cart to be tested to be released if the newly written blueprint information is consistent with the target blueprint information.

Through the above technical means, the newly written blueprint information in the electronic tag can be verified with the target blueprint information issued by an MES system, which is used for determining whether the target blueprint information is successfully written into the electronic tag of the cart to be tested, and can also play a role in the error-proof and fool-proof function.

In some embodiments, when the cart to be tested reaches the preset position, the method further includes: controlling a position-limiting assembly on the jacking mechanism to perform a position-limiting action so that the cart to be tested stays at the preset position; wherein the position-limiting assembly is used for limiting the position of the cart to be tested relative to the jacking mechanism.

Through the above technical means, when the cart to be tested reaches the preset position, the position-limiting assembly performs the position-limiting action on the cart to be tested, thereby achieving rough positioning of the cart to be tested.

In some embodiments, the jacking mechanism also includes a positioning assembly and a jacking assembly; and controlling the jacking mechanism to perform the positioning and jacking actions on the cart to be tested includes: controlling the positioning assembly to perform the positioning action, and controlling the jacking assembly to perform the jacking action, so as to complete the positioning and jacking actions of the jacking mechanism on the cart to be tested.

Controlling the jacking mechanism to perform the releasing action includes: controlling the positioning assembly and the jacking assembly to perform the releasing action, and controlling the position-limiting assembly to perform the releasing action.

Through the above technical means, when it is determined that the cart to be tested requires remodeling, the positioning assembly and the jacking assembly perform the positioning and jacking actions on the cart to be tested, so that precise positioning of the cart to be tested can be achieved.

In some embodiments, before sending the control instruction to the robot, the method further includes:
controlling a driving member to perform a first driving action to drive a transmission member to move to an initial position.

Correspondingly, after determining that the remodeling of the cart to be tested is successful, the method also includes: controlling the driving member to perform a second driving action to drive the transmission member to move to a corresponding axial positioning position in the target blueprint information.

Through the above technical means, before adjusting the position-limiting block, the driving member is first controlled to drive the transmission member to the initial position; after the adjustment of the position-limiting block is completed, the driving member is controlled to drive the transmission member to move to the corresponding axial positioning position in the target blueprint information. In this way, the difficulty in debugging can be reduced and the efficiency of on-site debugging can be improved.

In some embodiments, the driving member includes a first driving member arranged in a jacking sleeve assembly on the jacking mechanism, and the transmission member includes a transverse transmission member arranged in the tray. Controlling the driving member to perform the first driving action to drive the transmission member to move to the initial position includes: controlling the jacking sleeve assembly on the jacking mechanism to perform a nut recognition action so that the first driving member is connected to the transverse transmission member through a first connecting member in the jacking sleeve assembly, and controlling the first driving member to drive the first connecting member to rotate, so as to drive, through the first connecting member, the transverse transmission member to move to an initial position of the transverse transmission member; wherein the transverse transmission member extends in a first direction.

Through the above technical means, the first connecting member and the first driving member are arranged in the jacking sleeve assembly, and therefore, the first connecting member can be driven to rotate by the first driving member, so as to drive the transverse transmission member in the tray that is sleeved with the first connecting member to rotate, so that the position of a structural member connected to the transverse transmission member in the tray can be adjusted. At the same time, the first connecting member and the first driving member are both arranged on a first nut recognition assembly, and the first connecting member can be driven by the first nut recognition assembly to move in a direction close to the transverse transmission member in the tray, so that the first connecting member can be sleeved with the transverse transmission member. In this way, the position of the structural member in the tray that needs to be moved can be quickly adjusted by the jacking sleeve assembly.

In some embodiments, the driving member includes a second driving member arranged in a gripper sleeve assembly on the gripper mechanism, and the transmission member includes a longitudinal transmission member arranged in the tray. Controlling the driving member to perform the first driving action to drive the transmission member to move to the initial position further includes: starting a robot, and controlling the robot to move from a first position to a second position; controlling the gripper sleeve assembly on the gripper mechanism to perform a nut recognition action so that the second driving member is connected to the longitudinal transmission member through a second connecting member in the gripper sleeve assembly, and controlling the second driving member to drive the second connecting member to rotate, so as to drive, through the second connecting member, the longitudinal transmission member to move to an initial position of the longitudinal transmission member; wherein the longitudinal transmission member extends in a second direction.

Through the above technical means, the second connecting member and the second driving member are arranged in the gripper sleeve assembly, and therefore, the second connecting member can be driven to rotate by the second driving member, so as to drive the longitudinal transmission member in the tray that is sleeved with the second connecting member to rotate, so that the position of a structural member connected to the longitudinal transmission member in the tray can be adjusted. At the same time, the second connecting member is arranged on a second nut recognition assembly, and the second connecting member can be driven by the second nut recognition assembly to move in a direction close to the longitudinal transmission member in the tray, so that the second connecting member can be sleeved with the longitudinal transmission member. In this way, the position of the other structural member in the tray that needs to be moved can be quickly adjusted by the gripper sleeve assembly.

In some embodiments, after determining that the remodeling of the cart to be tested is successful, controlling the driving member to perform the second driving action to drive the transmission member to move to the axial positioning position of the target blueprint information includes: controlling the second driving member to rotate to drive the longitudinal transmission member to reach the positioning position in the second direction in the target blueprint information, and controlling the gripper sleeve assembly on the gripper mechanism to perform a separation action, and controlling the robot to return to the first position; controlling the first driving member to rotate to drive the transverse transmission member to reach the positioning position in the first direction in the target blueprint information, and controlling the jacking sleeve assembly on the jacking mechanism to perform the separation action.

Through the above technical means, after determining that the remodeling of the cart to be tested is successful, it is also necessary to control the transverse transmission member and the longitudinal transmission member to reach the corresponding axial positioning positions respectively, and after completing the driving process of the transverse transmission member, the first nut recognition assembly drives the first connecting member to separate from the transverse transmission member; and after completing the driving process of the longitudinal transmission member, the second nut recognition assembly drives the second connecting member to separate from the longitudinal transmission member. In this way, the position of the structural member in the tray that needs to be moved can be quickly adjusted by the jacking sleeve assembly and the gripper sleeve assembly.

In a second aspect, the embodiments of the present disclosure provide a cart remodeling system, and the system includes:
a cart to be tested including a tray and at least one position-limiting block arranged on the tray;
a gripper mechanism capable of being installed on a mechanical arm of a robot and having a gripper assembly, the gripper assembly being used for picking or placing the position-limiting block; and
a jacking mechanism arranged at a remodeling station where remodeling of the cart to be tested is performed, wherein the jacking mechanism includes a jacking bracket and a position-limiting assembly arranged on the jacking bracket, and the position-limiting assembly is used for limiting a position of the cart to be tested relative to the jacking mechanism.

Through the above technical means, the gripper mechanism is arranged in the cart remodeling system, and the gripper assembly is arranged in the gripper mechanism, the position-limiting block can be picked or the position-limiting block can be placed through the gripper assembly. The gripper mechanism may be mounted on the robot, and the robot can drive the gripper mechanism to move to drive the movement of the position-limiting block, so that the position-limiting block on the cart to be tested can be replaced, or the position of the position-limiting block can be adjusted. At the same time, the jacking mechanism including the position-limiting assembly is provided. The position of the cart to be tested relative to the jacking mechanism can be limited through the position-limiting assembly, thereby limiting the movement of the cart to be tested so that the cart to be tested can be parked at the preset position. In this way, in the process of replacing or adjusting the position-limiting block through the gripper mechanism, it is conducive to quickly and accurately determining the position of the position-limiting block that needs to be replaced, or quickly and accurately determining the position where the position-limiting block to be placed is, so that it is conducive to controlling the robot to drive the gripper mechanism to quickly move to the required position, thereby improving the efficiency of the cart remodeling system in remodeling of the cart to be tested.

In some embodiments, the jacking mechanism further includes a jacking sleeve assembly; the jacking sleeve assembly includes a first driving member, a first connecting member, and a first nut recognition assembly; wherein the first nut recognition assembly is arranged on the jacking bracket; the first driving member is fixed on the first nut recognition assembly, and the first connecting member is drivingly connected to an output shaft of the first driving member. Driven by the first nut recognition assembly, the first connecting member is capable of moving in the direction close to the transverse transmission member in the tray and being connected to the transverse transmission member; and driven by the first driving member, the first connecting member is capable of driving the transverse transmission member to rotate.

Through the above technical means, the first connecting member is arranged in the jacking sleeve assembly and the first driving member drivingly connected to the first connecting member is further arranged; therefore, the first connecting member can be driven to rotate by the first driving member. During the rotation of the first connecting member, the transverse transmission member in the tray that is sleeved with the first connecting member can be driven to rotate, so that the position of the structural member in the tray connected to the transverse transmission member can be adjusted. At the same time, the first connecting member and the first driving member are both arranged on the first nut recognition assembly. The first nut recognition assembly can drive the first connecting member to move in the direction close to the transverse transmission member in the tray, so that the first connecting member can be sleeved to the transverse transmission member. After completing the driving process of the transverse transmission member, the first connecting member can also be driven by the first nut recognition assembly to separate from the transverse transmission member. In this way, the position of the structural member in the tray that needs to be moved can be quickly adjusted by the jacking sleeve assembly.

In some embodiments, the jacking mechanism further includes a jacking assembly. The jacking assembly includes a jacking driving member, a jacking transmission member, and a jacking beam. The jacking beam is slidably connected to the jacking bracket, for supporting the cart to be tested. One end of the jacking driving member is connected to the jacking bracket, and the other end is connected to the jacking transmission member. The jacking transmission member is slidably arranged on the jacking bracket, and drivingly connected to the jacking beam. When the jacking driving member drives the jacking transmission member to move, the jacking beam is capable of moving in the vertical direction under the action of the jacking transmission member.

Through the above technical means, the jacking assembly is provided with the jacking beam slidably connected to the jacking bracket, the jacking beam can carry and support the cart to be tested; and the jacking transmission member is slidably arranged on the jacking bracket. The jacking driving member is arranged between the jacking transmission member and the jacking bracket, and the jacking driving member can drive the jacking transmission member to move, thereby driving the jacking beam to move in the vertical direction. In this way, when the cart to be tested is in the position corresponding to the jacking mechanism, the cart to be tested can be jacked by the jacking assembly in the jacking mechanism, so that the cart to be tested can move in the vertical direction, thereby allowing the cart to be tested to be separated from the ground, so that the cart to be tested is at the required height.

In some embodiments, the position-limiting assembly includes a position-limiting driving member and a position-limiting member. The position-limiting driving member is fixed on the jacking bracket, and the position-limiting member is connected to the output shaft of the position-limiting driving member. Driven by the position-limiting driving member, the position-limiting member is capable of being connected to the cart to be tested to limit the position of the cart to be tested relative to the jacking mechanism.

Through the above technical means, the position-limiting driving member is arranged in the position-limiting assembly, and the position-limiting member may be driven by the position-limiting driving member to move. Before the cart to be tested moves into the jacking mechanism, the position-limiting member may be driven by the position-limiting driving member to move in a direction away from the center of the jacking mechanism, so as to facilitate the cart to be tested to enter the interior of the jacking mechanism. After the cart to be tested moves into the jacking mechanism, the position-limiting member may be driven by the position-limiting driving member to move in the direction close to the cart to be tested until the position-limiting member abuts against the cart to be tested, which can limit the movement of the cart to be tested relative to the jacking mechanism, thereby limiting the cart to be tested to the preset position.

In some embodiments, the gripper mechanism further includes a gripper sleeve assembly. The gripper sleeve assembly includes a second driving member, a second connecting member, and a second nut recognition assembly. The second nut recognition assembly and the second driving member are both arranged on the mechanical arm of the robot. The second connecting member is drivingly connected to the second nut recognition assembly, and the second connecting member is drivingly connected to the output shaft of the second driving member. Driven by the second nut recognition assembly, the second connecting member is capable of moving in a direction close to the longitudinal transmission member in the tray and is connected to the longitudinal transmission member. Driven by the second driving member, the second connecting member is capable of driving the longitudinal transmission member to rotate.

Through the above technical means, the second connecting member is arranged in the gripper sleeve assembly and the second driving member drivingly connected to the second connecting member is further arranged; therefore, the second connecting member can be driven to rotate by the second driving member. During the rotation of the second connecting member, the longitudinal transmission member in the tray that is sleeved with the second connecting member can be driven to rotate, so that the position of the structural member in the tray connected to the longitudinal transmission member can be adjusted. At the same time, the second connecting member is arranged on the second nut recognition assembly. The second nut recognition assembly can drive the second connecting member to move in the direction close to the longitudinal transmission member in the tray, so that the second connecting member can be sleeved to the longitudinal transmission member. After completing the driving process of the longitudinal transmission member, the second connecting member can also be driven by the second nut recognition assembly to separate from the longitudinal transmission member. In this way, the position of the other structural member in the tray that needs to be moved can be quickly adjusted by the gripper sleeve assembly.

In some embodiments, the gripper mechanism further includes a visual detection system, and the visual detection system is capable of being electrically coupled to a controller. The visual detection system is used for taking photographs of the site to be picked and the site to be placed, and performing offset compensation on positions of the site to be picked and the site to be placed.

Through the above technical means, the visual detection system is arranged on the gripper mechanism, information about the target position that the gripper assembly in the gripper mechanism intends to reach can be determined through the visual detection system, so that the gripper assembly can be controlled, according to the determined target position, to move to the target position, thereby enabling the gripper assembly to move to an accurate picking position or placing position, for improving the efficiency of replacing or positioning adjustment of the position-limiting block on the tray.

For the cart remodeling control method and system provided in the embodiments of the present disclosure, when the cart to be tested reaches the preset position, the current blueprint information of the cart to be tested is acquired, and the current blueprint information is matched with the target blueprint information sent by the manufacturing execution system for consistency; if the current blueprint information is inconsistent with the target blueprint information, it is determined to perform remodeling automatically for the cart to be tested, specifically: first, control the jacking mechanism to perform positioning and jacking actions on the cart to be tested, and then send the control instruction to the robot to control the gripper mechanism arranged on the robot to perform the pick-and-place action on the at least one position-limiting block on the tray; and when the position of the at least one position-limiting block matches the position-limiting block position in the target blueprint information, determine that the remodeling of the cart to be tested is successful, and release the cart. In this way, on the one hand, the blueprint information may be automatically issued by the manufacturing execution system and recognized through the electronic tag, which improves the data security; on the other hand, remodeling performed on the cart has been changed from manual replacement to automatic replacement, and the robot is simple in a remodeling logic, there is no need to configure a plurality of sensors, and it further improves the degree of automation of the devices, while reducing the labor costs and production costs, thereby improving the production efficiency during product remodeling. In still another aspect, controlling the lead screw displacement in the tray and performing the pick-and-place action on the at least one position-limiting block on the tray can also adapt to components to be transferred with different specifications and parameters, thereby improving the compatibility.

### Description of Drawings

Fig. 1 is a schematic compositional and structural diagram of a cart remodeling system according to an embodiment of the present disclosure;
Fig. 2 is a first schematic compositional and structural diagram of a jacking mechanism according to an embodiment of the present application;
Fig. 3 is a second schematic compositional and structural diagram of a jacking mechanism according to an embodiment of the present application;
Fig. 4 is a schematic compositional and structural diagram of a jacking sleeve assembly according to an embodiment of the present application;
Fig. 5 is a schematic compositional and structural diagram of a gripper sleeve assembly according to an embodiment of the present application;
Fig. 6 is a first schematic flowchart of a cart remodeling control method according to an embodiment of the present application;
Fig. 7 is a second schematic flowchart of a cart remodeling control method according to an embodiment of the present application;
Fig. 8 is a schematic structural top view of a site to be picked according to an embodiment of the present application;
Fig. 9 is a schematic structural top view of a site to be placed according to an embodiment of the present application;
Fig. 10 is a third schematic flowchart of a cart remodeling control method according to an embodiment of the present application;
Fig. 11 is a schematic detailed flowchart of a cart remodeling control method according to an embodiment of the present application; and
Fig. 12 is a schematic diagram of a network framework of an automatic remodeling station according to an embodiment of the present disclosure.

### Reference numerals:

1-Gripper mechanism; 11-Gripper assembly; 12-Gripper sleeve assembly; 121-Second driving member; 122-Second connecting member; 123-Second nut recognition assembly; 1231-Second sliding assembly; 12311-Pulley; 12312-Spline shaft; 1232-Nut recognition driving member; 124-Connecting bracket; 13-Visual detection system; 2-Jacking mechanism; 21-Jacking bracket; 22-Position-limiting assembly; 221-Position-limiting driving member 222-Position-limiting member; 23-Jacking sleeve assembly; 231-First driving member; 232-First connecting member; 233-First nut recognition assembly; 2331-First sliding assembly; 23311-Guide rail; 23312-Slider; 2332-Sliding driving member; 234-Sleeve bracket; 235-Bearing seat; 24-Jacking assembly; 241-Jacking driving member; 242-Jacking transmission member; 243-Jacking beam; 3-Cart to be tested; 31-Tray; 32-Position-limiting block; 33-Transverse transmission member; 34-Longitudinal transmission member; 4-Robot; m-First direction; and n-Second direction.

### Detailed Description

In order to understand the characteristics and technical content of the embodiments of the present disclosure in more detail, the implementation of the embodiments of the present disclosure will be described in detail below with reference to the accompanying drawings. The attached drawings are for reference only and are not intended to limit the embodiments of the present disclosure.

Unless otherwise defined, all technical and scientific terms used herein have the same meaning as commonly understood by those skilled in the art belonging to the technical field of the present application. The terms used herein are for the purpose of describing embodiments of the present disclosure only and are not intended to limit the present disclosure.

In that follow description, "some embodiments" are involved, which describe a subset of all possible embodiments, but it is understood that "some embodiments" may be the same subset or different subsets of all possible embodiments, and may be combined with each other without conflict.

It is also to be note that the term "first\second\third" involved in the embodiments of the present disclosure is only used to distinguish similar objects, does not represent a particular order for the objects, and it is understood that "first\second\third" may be interchanged, where permitted, in a particular order or sequence, so that the embodiments of the present disclosure described herein can be implemented in an order other than those illustrated or described herein.

It should be further noted that, the term "and/or" involved in the embodiments of the present disclosure is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

It should be further noted that, the term "a plurality of" involved in the embodiments of the present disclosure refers to two or more (including two), and similarly, "a plurality of groups" refers to two or more (including two) groups, and "a plurality of sheets" refers to two or more (including two) sheets.

It should be further noted that, the orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", and the like involved in the embodiments of the present disclosure are based on orientations or positional relationships as shown in the drawings, and are only for the purpose of facilitating and simplifying the descriptions of the embodiments of the present application instead of indicating or implying that apparatuses or elements indicated must have particular orientations, and be constructed and operated in the particular orientations, so that these terms are not construed as limiting the embodiments of the present disclosure.

It should be further noted that, in the embodiments of the present disclosure, unless otherwise expressly specified and limited, the technical terms "mount", "join", "connect", "fix", and the like should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present disclosure can be understood according to specific situations.

From the perspective of the development of the market situation, power batteries are increasingly more widely used, and there are increasingly more types of power batteries. Power batteries are not only applied in energy storage power source systems such as water, fire, wind, and solar power stations, but also widely applied in electric transportation tools, such as electric bicycles, electric motorcycles, and electric vehicles, as well as many fields, such as military equipment and aerospace. With the continuous expansion of the application field of the power batteries, the market demand is also constantly expanding.

In the related art, a battery production line mainly uses semi-automatic devices for implementing processes such as battery processing, assembling, conveying, and testing. In battery production lines, transfer apparatuses are usually used to transfer battery components from the previous process to the next process for processing, assembling, and the like. However, the transfer apparatus in the battery production line can only adapt to battery components of one specification and size, and cannot automatically be compatible with products of different sizes. When the product performs remodeling, manual replacement is required, such as manually selecting formulas and modifying parameters, and at the same time the manual replacement also involves the risk of missed replacements and mistaken replacements, and manual replacement takes a long time and requires large manpower, resulting in low production efficiency and high costs.

In order to solve the above problem, a cart remodeling control system and a corresponding control method are provided in the embodiments of the present disclosure. When a cart to be tested reaches a preset position, current blueprint information of the cart to be tested is matched with target blueprint information sent by a manufacturing execution system for consistency; if the current blueprint information is inconsistent with the target blueprint information, it is determined to perform remodeling automatically, specifically: first, a controller controls a jacking mechanism to perform positioning and jacking actions on the cart to be tested, and then a robot controls a gripper mechanism to perform a pick-and-place action on at least one position-limiting block on a tray; and when the position of the at least one position-limiting block matches a position-limiting block position in the target blueprint information, it is determined that the remodeling of the cart to be tested is successful, and the cart is released. In this way, on the one hand, the blueprint information may be automatically issued by the manufacturing execution system and recognized through the electronic tag, which improves the data security; on the other hand, remodeling performed on the cart has been changed from manual replacement to automatic replacement, and the robot is simple in a remodeling logic, there is no need to configure a plurality of sensors, and it further improves the degree of automation of the devices, while reducing the labor costs and production costs, thereby improving the production efficiency during product remodeling. In still another aspect, controlling the lead screw displacement in the tray and performing the pick-and-place action on the at least one position-limiting block on the tray can also adapt to components to be transferred with different specifications and parameters, thereby improving the compatibility.

Various embodiments of the present disclosure are described in detail below with reference to the accompanying drawings.

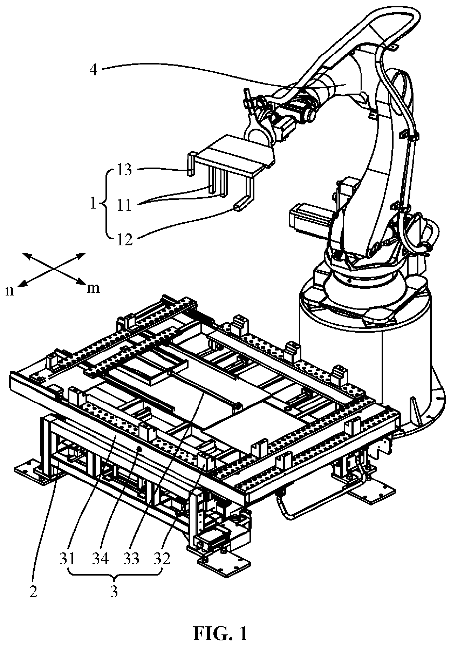

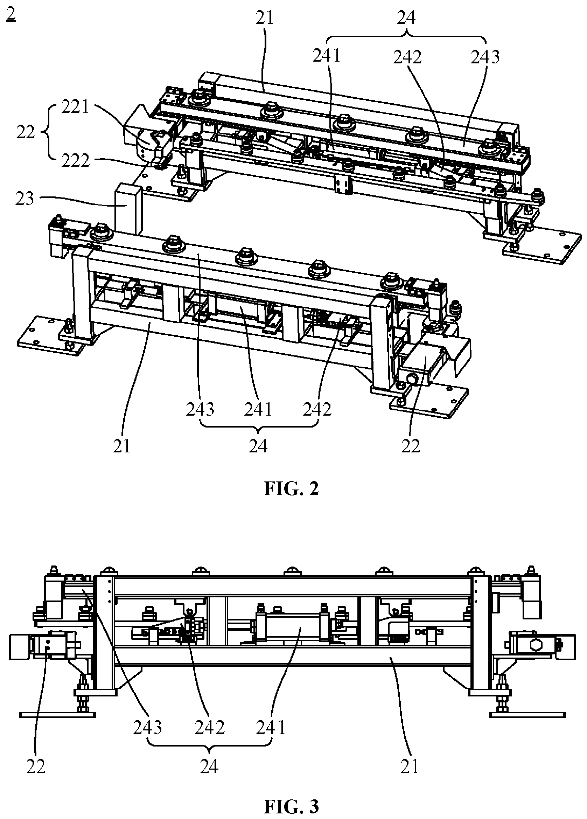

In an embodiment of the present disclosure, referring to Fig. 1 and Fig. 2, Fig. 1 shows a schematic compositional and structural diagram of a cart remodeling system according to an embodiment of the present disclosure, and Fig. 2 shows a first schematic compositional and structural diagram of a jacking mechanism according to an embodiment of the present disclosure. The cart remodeling system may include: a gripper mechanism 1 and a jacking mechanism 2. The gripper mechanism 1 is capable of being installed on a mechanical arm of a robot 4, the gripper mechanism 1 has a gripper assembly 11, and the gripper assembly 11 is used for picking or placing a position-limiting block 32 in a tray 31 arranged on the cart to be tested 3. The jacking mechanism 2 is arranged at a remodeling station for performing remodeling of the cart to be tested 3. The jacking mechanism 2 includes a jacking bracket 21 and a position-limiting assembly 22 arranged on the jacking bracket 21. The position-limiting assembly 22 is used for limiting a position of the cart to be tested 3 relative to the jacking mechanism 2.

In the embodiment of the present disclosure, the cart remodeling system may be used for performing remodeling on the cart to be tested 3 that carries and transports a component to be transferred, so that the cart to be tested 3 matches the component to be transferred, and the component to be transferred is capable of being placed on the cart to be tested 3. The cart to be tested 3 can position and clamp the component to be transferred, thereby achieving smooth transportation of the component to be transferred. The cart to be tested 3 may be in a structural form including the tray 31, and the position-limiting block 32 is arranged on the tray 31. The component to be transferred may abut against the position-limiting block 32, the component to be transferred is supported by the position-limiting block 32 and the position of the component to be transferred is limited thereby, so that the component to be transferred is located in a fixed position on the tray 31.

For example, the component to be transferred may be a battery pack (Pack), a lower box body of the battery pack, and the like, so that the cart to be tested 3 may also be referred to as a "Pack Cart".

The cart to be tested 3 may also be provided with a transport member, and the transport member may be a transport cart with a carrier frame and wheels, and the transport cart may travel on the road. For example, the transport cart may be an unpowered transport cart, and the unpowered transport cart may be pulled by an Automated Guided Vehicle (AGV), so that the cart to be tested 3 can support the component to be transferred to a required location. The transport cart may also adopt the AGV, and the tray 31 is arranged on the AGV. The specific structure of the cart to be tested 3 is not limited in the embodiment of the present disclosure.

In the embodiment of the present disclosure, in order to replace the position-limiting block 32 arranged on the tray 31 or adjust the position of the position-limiting block 32 on the tray 31, the gripper mechanism 1 may be arranged, and the gripper mechanism 1 is provided with the gripper assembly 11 that is capable of gripping the position-limiting block 32. For example, the gripper assembly 11 may be a structure including two gripping rods, and the gripping rods are movable to pick or place the position-limiting block 32. A connecting member that is capable of being adapted to the mechanical arm of the robot 4 may be arranged in the gripper mechanism 1, so that the gripper mechanism 1 may be mounted on the mechanical arm of the robot 4 through the connecting member. For example, the robot 4 may adopt a six-axis robot, so that the gripper mechanism 1 is driven to move by the six-axis robot, thereby completing the movement of the position-limiting block 32.

In the embodiment of the present disclosure, before performing remodeling of the cart to be tested 3, that is, before adjusting the position-limiting block 32 on the cart to be tested 3, the position of the cart to be tested 3 needs to be limited so that the cart to be tested 3 is in a preset position. Then, the jacking mechanism 2 may be arranged at the remodeling station for performing remodeling on the cart to be tested 3, and the jacking mechanism 2 may be configured in a structural form including the jacking bracket 21 and the position-limiting assembly 22. The jacking bracket 21 may be used for supporting and fixing the entire jacking mechanism 2, and the jacking mechanism 2 may be arranged at the remodeling station through the jacking bracket 21. The position-limiting assembly 22 may be arranged on the jacking bracket 21, and the position-limiting assembly 22 may be configured as a structure capable of generating movement. In a case that the cart to be tested 3 moves to the position where the jacking mechanism 2 is located, the position-limiting assembly 22 may be moved relative to the jacking bracket 21 so that the position-limiting assembly 22 abuts against the cart to be tested 3, and therefore, the cart to be tested 3 may be limited to the position where the jacking mechanism 2 is located.

As can be seen from the above embodiment, the gripper mechanism 1 is arranged in the cart remodeling system, and the gripper assembly 11 is arranged in the gripper mechanism 1, the position-limiting block 32 can be picked or the position-limiting block 32 can be placed through the gripper assembly 11. The gripper mechanism 1 may be mounted on the robot 4, and the robot 4 can drive the gripper mechanism 1 to move to drive the movement of the position-limiting block 32, so that the position-limiting block 32 on the cart to be tested 3 can be replaced, or the position of the position-limiting block 32 can be adjusted. At the same time, the jacking mechanism 2 including the position-limiting assembly 22 is provided. The position of the cart to be tested 3 relative to the jacking mechanism 2 can be limited through the position-limiting assembly 22, thereby limiting the movement of the cart to be tested 3 so that the cart to be tested 3 can be parked at the preset position. In this way, in the process of replacing or adjusting the position-limiting block 32 through the gripper mechanism 1, it is conducive to quickly and accurately determining the position of the position-limiting block 32 that needs to be replaced, or quickly and accurately determining the position where the position-limiting block 32 to be placed is, so that it is conducive to controlling the robot 4 to drive the gripper mechanism 1 to quickly move to the required position, thereby improving the efficiency of the cart remodeling system in remodeling of the cart to be tested 3.

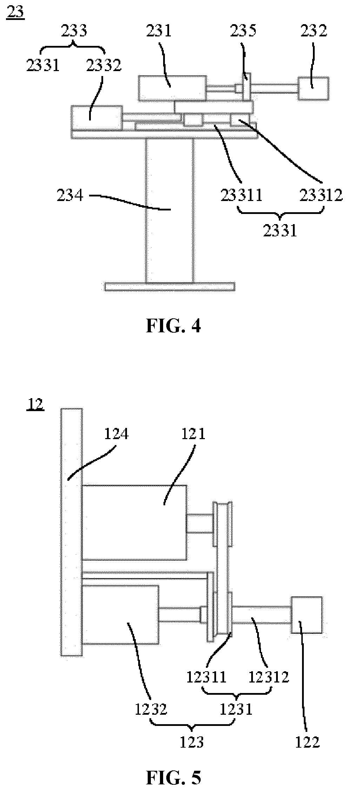

In some embodiments, refer to Fig. 2, Fig. 3, and Fig. 4, Fig. 2 shows a first schematic compositional and structural diagram of a jacking mechanism according to an embodiment of the present disclosure, Fig. 3 shows a second schematic compositional and structural diagram of a jacking mechanism according to an embodiment of the present disclosure, and Fig. 4 shows a schematic compositional and structural diagram of a jacking sleeve assembly according to an embodiment of the present disclosure. The jacking mechanism 2 in the cart remodeling system further includes a jacking sleeve assembly 23. The jacking sleeve assembly 23 includes a first driving member 231, a first connecting member 232, and a first nut recognition assembly 233. The first nut recognition assembly 233 is arranged on the jacking bracket 21; the first driving member 231 is fixed on the first nut recognition assembly 233, and the first connecting member 232 is drivingly connected to an output shaft of the first driving member 231. Driven by the first nut recognition assembly 233, the first connecting member 232 is capable of moving in the direction close to a transverse transmission member 33 in the tray 31 and being connected to the transverse transmission member 33; and driven by the first driving member 231, the first connecting member 232 is capable of driving the transverse transmission member 33 to rotate. The transverse transmission member 33 extends in a first direction. Illustratively, as shown in Fig. 1, m represents the first direction.

In the embodiment of the present disclosure, as shown in Fig. 4, a sleeve bracket 234 may be arranged in the jacking sleeve assembly 23, and the jacking sleeve assembly 23 is arranged on the jacking bracket 21 of the jacking mechanism 2 through the sleeve bracket 234. The first nut recognition assembly 233 may be configured in a structural form including a first sliding assembly 2331 and a sliding driving member 2332. The first sliding assembly 2331 may include a matching guide rail 23311 and a slider 23312. The guide rail 23311 is fixed on the sleeve bracket 234, and the slider 23312 is slidably connected to the guide rail 23311. The sliding driving member 2332 may adopt a driving cylinder, a cylinder barrel of the driving cylinder is connected to the sleeve bracket 234, and a piston rod of the driving cylinder is connected to the slider 23312.

For example, the first connecting member 232 may be a screwdriver bit adapted to the transverse transmission member 33 on the tray 31, and the first connecting member 232 may be sleeved on an end portion of a lead screw serving as the transverse transmission member 33 on the tray 31. The first connecting member 232 may be rotatably arranged on the slider 23312 in the first sliding assembly 2331. For example, a bearing seat 235 is arranged on the slider 23312, the first connecting member 232 penetrates through an inner hole of an inner ring of a bearing located in the bearing seat 235, and the first connecting member 232 is rotatable. An axial direction of the first connecting member 232 may be set to be the same as an extending direction of the first sliding assembly 2331.

In another example, the first driving member 231 may adopt a structural form of a servo motor and a reducer. The servo motor and the reducer are fixed on the slider 23312, and the reducer is connected to an output shaft of the servo motor, and then an output shaft of the reducer is drivingly connected to the first connecting member 232. In this way, the servo motor may be used to drive the reducer to rotate, so as to drive the first connecting member 232 to rotate.

As can be seen from the above embodiment, the first connecting member 232 is arranged in the jacking sleeve assembly 23 and the first driving member 231 drivingly connected to the first connecting member 232 is further arranged; therefore, the first connecting member 232 can be driven to rotate by the first driving member 231. During the rotation of the first connecting member 232, the transverse transmission member 33 in the tray 31 that is sleeved with the first connecting member 232 can be driven to rotate, so that the position of the structural member in the tray 31 connected to the transverse transmission member 33 can be adjusted. At the same time, the first connecting member 232 and the first driving member 231 are both arranged on the first nut recognition assembly 233. The first nut recognition assembly 233 can drive the first connecting member 232 to move in the direction close to the transverse transmission member 33 in the tray 31, so that the first connecting member 232 can be sleeved to the transverse transmission member 33. After completing the driving process of the transverse transmission member 33, the first connecting member 232 can also be driven by the first nut recognition assembly 233 to separate from the transverse transmission member 33. In this way, the position of the structural member in the tray 31 that needs to be moved can be quickly adjusted by the jacking sleeve assembly 23.

In some embodiments, as shown in Fig. 2 and Fig. 3, the jacking mechanism 2 further includes a jacking assembly 24. The jacking assembly 24 includes a jacking driving member 241, a jacking transmission member 242, and a jacking beam 243. The jacking beam 243 is slidably connected to the jacking bracket 21, for supporting the cart to be tested 3. One end of the jacking driving member 241 is connected to the jacking bracket 21, and the other end is connected to the jacking transmission member 242. The jacking transmission member 242 is slidably arranged on the jacking bracket 21, and drivingly connected to the jacking beam 243. When the jacking driving member 241 drives the jacking transmission member 242 to move, the jacking beam 243 is capable of moving in the vertical direction under the action of the jacking transmission member 242.

In the embodiment of the present disclosure, in order to facilitate supporting the cart to be tested 3, the jacking beam 243 may be arranged in the jacking assembly 24. The jacking beam 243 may be set as a strip-shaped columnar structure, and the columnar jacking beam 243 may be connected to the jacking bracket 21 in a sliding connection manner. For example, slidingly connected guide rail and slider may be used, the guide rail is fixed on the jacking bracket 21, and the jacking beam 243 is fixedly connected to the slider, so that the jacking beam 243 is slidably connected to the jacking bracket 21. The jacking beam 243 may be configured as a structure that slides in the vertical direction, and two parallel jacking beams 243 may be arranged on the jacking bracket 21.

For example, the jacking transmission member 242 may be slidably arranged on the jacking bracket 21. For example, a guide rail is fixedly arranged on the jacking bracket 21, and a chute adapted to the guide rail is arranged on the jacking transmission member 242, so that the jacking transmission member 242 may be slidably connected to the jacking bracket 21 through the chute and the guide rail. The jacking transmission member 242 may be configured as a wedge-shaped block structure with an inclined surface, and the inclined surface is drivingly connected to the jacking beam 243. Then, during the movement of the jacking transmission member 242 in its long axis direction, under the action of the inclined surface, the jacking beam 243 may be enabled to move in the vertical direction.

For another example, the jacking driving member 241 may be configured as a structure including a driving cylinder, a cylinder barrel of the driving cylinder is connected to the jacking bracket 21, and a piston rod of the driving cylinder is connected to the jacking transmission member 242. Then the jacking transmission member 242 may be driven to move by driving the cylinder.

As can be seen from the above embodiment, the jacking assembly 24 is provided with the jacking beam 243 slidably connected to the jacking bracket 21, the jacking beam 243 can carry and support the cart to be tested 3; and the jacking transmission member 242 is slidably arranged on the jacking bracket 21. The jacking driving member 241 is arranged between the jacking transmission member 242 and the jacking bracket 21, and the jacking driving member 241 can drive the jacking transmission member 242 to move, thereby driving the jacking beam 243 to move in the vertical direction. In this way, when the cart to be tested 3 is in the position corresponding to the jacking mechanism 2, the cart to be tested 3 can be jacked by the jacking assembly 24 in the jacking mechanism 2, so that the cart to be tested 3 can move in the vertical direction, thereby allowing the cart to be tested 3 to be separated from the ground, so that the cart to be tested 3 is at the required height.

In some embodiments, the position-limiting assembly 22 in the jacking mechanism 2 includes a position-limiting driving member 221 and a position-limiting member 222. The position-limiting driving member 221 is fixed on the jacking bracket 21, and the position-limiting member 222 is connected on an output shaft of the position-limiting driving member 221. Driven by the position-limiting driving member 221, the position-limiting member 222 is capable of being connected to the cart to be tested 3 to limit the position of the cart to be tested 3 relative to the jacking mechanism 2.

In the embodiment of the present disclosure, as shown in Fig. 2, the position-limiting driving member 221 may be arranged in the position-limiting assembly 22, and the position-limiting driving member 221 may adopt a driving cylinder. The position-limiting member 222 may be configured in a structural form having a position-limiting bump. The position-limiting bump is fixed on a piston rod of the driving cylinder, and the position-limiting member 222 may be driven to move by the driving cylinder. For example, in the direction of movement of the cart to be tested 3, that is, along the long axis direction of the jacking mechanism 2, a set of position-limiting assemblies 22 are respectively provided at both ends of the jacking bracket 21. In this way, when the cart to be tested 3 moves to the inside of the jacking mechanism 2, the two position-limiting members 222 in the two sets of position-limiting assemblies 22 may be in contact with the front end and the rear end of the cart to be tested 3 respectively, thereby limiting the movement of the cart to be tested 3.

As can be seen from the above embodiment, the position-limiting driving member 221 is arranged in the position-limiting assembly 22, and the position-limiting member 222 may be driven by the position-limiting driving member 221 to move. Before the cart to be tested 3 moves into the jacking mechanism 2, the position-limiting member 222 may be driven by the position-limiting driving member 221 to move in a direction away from the center of the jacking mechanism 2, so as to facilitate the cart to be tested 3 to enter the interior of the jacking mechanism 2. After the cart to be tested 3 moves into the jacking mechanism 2, the position-limiting member 222 may be driven by the position-limiting driving member 221 to move in the direction close to the cart to be tested 3 until the position-limiting member 222 abuts against the cart to be tested 3, which can limit the movement of the cart to be tested 3 relative to the jacking mechanism 2, thereby limiting the cart to be tested 3 to the preset position.

In some embodiments, referring to Fig. 5, which shows a schematic compositional and structural diagram of a gripper sleeve assembly according to an embodiment of the present application. As shown in Fig. 2 and Fig. 5, a gripper sleeve assembly 12 may also be arranged in the gripper mechanism 1 of the cart remodeling system. The gripper sleeve assembly 12 includes a second driving member 121, a second connecting member 122, and a second nut recognition assembly 123. The second nut recognition assembly 123 and the second driving member 121 are both arranged on the mechanical arm of the robot 4; the second connecting member 122 is drivingly connected to the second nut recognition assembly 123, and the second connecting member 122 is drivingly connected to an output shaft of the second driving member 121. Driven by the second nut recognition assembly 123, the second connecting member 122 is capable of moving in a direction close to the longitudinal transmission member 34 in the tray 31, and being connected to the longitudinal transmission member 34. Driven by the second driving member 121, the second connecting member 122 is capable of driving the longitudinal transmission member 34 to rotate. The longitudinal transmission member 34 extends in a second direction. Illustratively, as shown in Fig. 1, n represents the second direction.

In the embodiment of the present disclosure, there is an included angle between the first direction m and the second direction n. For example, the first direction m is the horizontal axis direction, and the second direction n is the vertical axis direction. At this time, the included angle between the first direction m and the second direction n is 90 degrees.

In the embodiment of the present disclosure, as shown in Fig. 5, a connecting bracket 124 may be arranged in the gripper sleeve assembly 12, and the gripper sleeve assembly 12 is arranged on the mechanical arm of the robot 4 through the connecting bracket 124. The second nut recognition assembly 123 may be configured in a structural form including a second sliding assembly 1231 and a nut recognition driving member 1232. The second sliding assembly 1231 may include a pulley 12311 and a spline shaft 12312. The pulley 12311 is rotatably arranged on the connecting bracket 124. A spline slot hole adapted to the spline shaft 12312 is arranged on the pulley 12311, and the spline shaft 12312 penetrates through the spline slot hole, and the spline shaft 12312 may slide in an axial direction of the spline slot hole. The nut recognition driving member 1232 may adopt a driving cylinder. A cylinder barrel of the driving cylinder is connected to the connecting bracket 124. A piston rod of the driving cylinder is rotationally connected to the other end of the spline shaft 12312. The piston rod may drive the spline shaft 12312 to reciprocate in an axial direction of the spline shaft 12312, and the spline shaft 12312 may still rotate, but the piston rod will not rotate together with the spline shaft 12312.

For example, the second connecting member 122 may be a screwdriver bit adapted to the longitudinal transmission member 34 on the tray 31, and the second connecting member 122 may be sleeved on an end portion of a lead screw serving as the longitudinal transmission member 34 on the tray 31. The second connecting member 122 may be connected to the spline shaft 12312, for example, the second connecting member 122 is fixedly mounted on one end of the spline shaft 12312. Therefore, the second connecting member 122 may be driven by the second nut recognition assembly 123 to move in a direction closer to the longitudinal transmission member 34.

In another example, the second driving member 121 may adopt a structural form of a servo motor and a reducer. The servo motor and the reducer are fixed on the connecting bracket 124, and the reducer is connected to an output shaft of the servo motor, and then an output shaft of the reducer is drivingly connected to the pulley 12311. In this way, the servo motor may be used to drive the reducer to rotate, so as to drive the pulley 12311 to rotate, thereby driving the second connecting member 122 to rotate.

As can be seen from the above embodiment, the second connecting member 122 is arranged in the gripper sleeve assembly 12 and the second driving member 121 drivingly connected to the second connecting member 122 is further arranged; therefore, the second connecting member 122 can be driven to rotate by the second driving member 121. During the rotation of the second connecting member 122, the longitudinal transmission member 34 in the tray 31 that is sleeved with the second connecting member 122 can be driven to rotate, so that the position of the structural member in the tray 31 connected to the longitudinal transmission member 34 can be adjusted. At the same time, the second connecting member 122 is arranged on the second nut recognition assembly 123. The second nut recognition assembly 123 can drive the second connecting member 122 to move in the direction close to the longitudinal transmission member 34 in the tray 31, so that the second connecting member 122 can be sleeved to the longitudinal transmission member 34. After completing the driving process of the longitudinal transmission member 34, the second connecting member 122 can also be driven by the second nut recognition assembly 123 to separate from the longitudinal transmission member 34. In this way, the position of the other structural member in the tray 31 that needs to be moved can be quickly adjusted by the gripper sleeve assembly 12.

In some embodiments, the gripper mechanism 1 of the cart remodeling system may be further provided with a visual detection system 13, and the visual detection system 13 is capable of being electrically coupled to a controller. The visual detection system 13 is used for taking photographs of a site to be picked and a site to be placed, and performing offset compensation on positions of the site to be picked and the site to be placed.

In the embodiment of the present disclosure, in the process of replacing or adjusting the position of the position-limiting block 32 on the tray 31 through the gripper assembly 11 in the gripper mechanism 1, it is necessary to determine whether the position of the gripper assembly 11 is accurate. As shown in Fig. 1, the visual detection system 13 may be arranged in the gripper mechanism 1, and an accurate target position of the position to which the gripper assembly 11 is to be moved is determined through the visual detection system 13. The visual detection system 13 may be connected to the controller in a wired or wireless manner. The controller may be a lower computer in the production line, such as a Programmable Logic Controller (PLC), which is a computer device capable of being used for controlling movements of various components.

For example, the visual detection system 13 may be configured as a structure including a Charge Coupled Device (CCD) camera. The CCD camera may be used to take photographs of the site to be picked where the position-limiting block 32 is located, and the captured image of the site to be picked may be used to calculate and determine a first offset of the site to be picked, so that offset compensation may be performed on the site to be picked based on the first offset. In other words, the target position of the site to be picked may be determined according to the first offset and the site to be picked, and then the movement of the robot 4 may be controlled to drive the gripper assembly 11 in the gripper mechanism 1 to move to the target position of the site to be picked. Alternatively, the CCD camera may be used to take photographs of the site to be placed where the position-limiting block 32 is located, and the captured image of the site to be placed may be used to calculate and determine a second offset of the position where the position-limiting block 32 is to be placed, so that offset compensation may be performed on the site to be placed based on the second offset. In other words, the target position of the site to be placed may be determined according to the second offset and the site to be placed, and then the movement of the robot 4 may be controlled to drive the gripper assembly 11 in the gripper mechanism 1 to move to the target position of the site to be placed.

As can be seen from the above embodiment, the visual detection system 13 is arranged on the gripper mechanism 1, and therefore, the positions of the site to be picked and the site to be placed may be visually guided and corrected by the visual detection system 13. According to the corresponding offset data, the information of the target position that the gripper assembly 11 in the gripper mechanism 1 is to reach is capable of being determined, so that the gripper assembly 11 may be controlled to move to the target position according to the determined target position, and the gripper assembly 11 may then be moved to an accurate picking position or placement position, thereby improving the efficiency of replacement or position adjustment of the position-limiting block 32 on the tray 31.

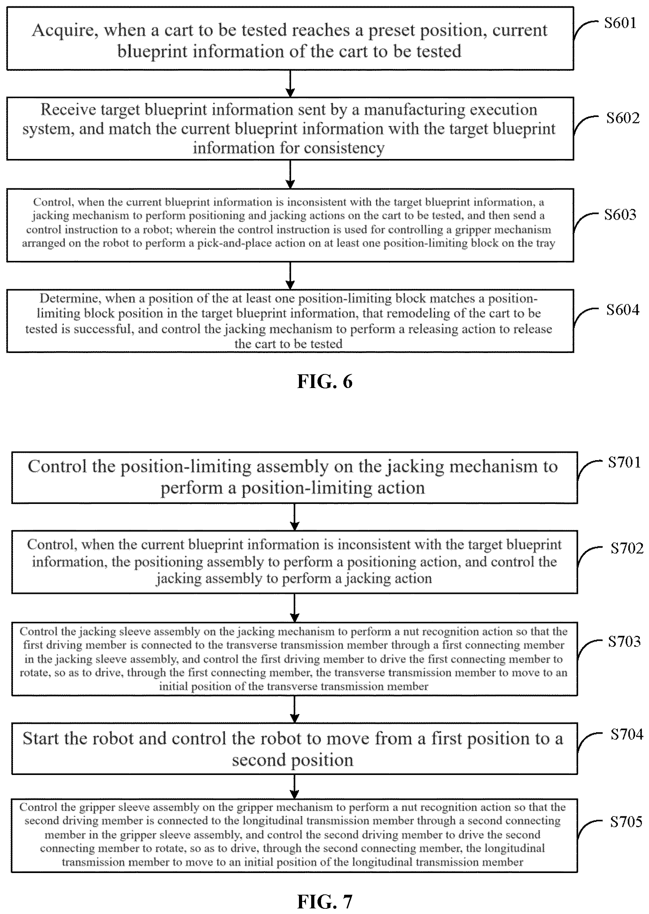

In another embodiment of the present disclosure, referring to Fig. 6, which is a first schematic flowchart of a cart remodeling control method according to an embodiment of the present application. As shown in Fig. 6, the method may include:
S601: Acquire, when a cart to be tested reaches a preset position, current blueprint information of the cart to be tested.

It should be noted that, in the embodiment of the present disclosure, the method may be applied to a controller. The controller may be a lower computer PLC in the production line. Using the PLC to realize automatic remodeling of the cart to be tested may reduce labor costs and production costs, so that the production efficiency is higher.

It should be further noted that in the embodiment of the present disclosure, a tray is placed on an upper surface of the cart to be tested, and the tray is used for carrying a component to be transferred. The cart to be tested is used as a transfer apparatus, which can transfer a component of the previous process to the next process for processing, assembling, and the like.

It should be further noted that in the embodiment of the present disclosure, at least one position-limiting block is arranged on the tray, and the at least one position-limiting block is used for limiting the position of the component to be transferred on the tray.

Here, the component to be transferred may be a battery pack, a box body (in particular, a lower box body) of the battery pack, or the like, so that the cart to be tested may also be referred to as a "Pack Cart".

It should be further noted that in the embodiment of the present disclosure, the cart to be tested may be pulled and moved by an automated guided vehicle.

In some embodiments, before the cart to be tested reaches a preset position, the method further includes: receiving an entry request sent by the automated guided vehicle; and sending, based on the entry request, an entry permit instruction to the automated guided vehicle.

The entry permit instruction is used to instruct the automated guided vehicle to pull the cart to be tested to move until the cart to be tested reaches the preset position.

It should be noted that in the embodiment of the present disclosure, the automated guided vehicle sends the entry request to the controller; after the controller allows entry, the automated guided vehicle may pull the cart to be tested into a remodeling station.

It should be further noted that in the remodeling station, the automated guided vehicle travels along a predetermined route, and a sensor chip is arranged at the preset position. When the automated guided vehicle pulls the cart to be tested to move to the preset position, a sensing apparatus of the cart to be tested will receive a signal sent by the sensor chip, which means that the automated guided vehicle is in place, that is, the cart to be tested reaches the preset position.

In some embodiments, the cart to be tested is also provided with an electronic tag. Acquiring the current blueprint information of the cart to be tested may include: reading, after the cart to be tested reaches the preset position, blueprint information in the electronic tag through a reader/writer to obtain the current blueprint information of the cart to be tested.

Here, the electronic tag may be a Radio Frequency Identification (RFID) chip, which is specifically placed on a lower surface of the tray. In this way, after the cart to be tested reaches the preset position, the controller may identify the electronic tag to read the current blueprint information of the cart to be tested.

S602: Receive target blueprint information sent by a manufacturing execution system, and match the current blueprint information with the target blueprint information for consistency.

It should be noted that in the embodiment of the present disclosure, the target blueprint information may be sent to the controller by a Manufacturing Execution System (MES). The MES system is deployed in the upper computer or server.

Here, the MES system is used for acquiring output information of a plurality of production devices. The output information includes output time of a plurality of products produced by the production device and identifications used for indicating whether the plurality of products are qualified. The MES system includes monitoring of the production process. The monitoring of the production process of the MES system focuses on monitoring of material transportation and quality indicators between a production process and a technological process. It is based on real-time data of the production process and uses the configuration technology of the MES system to realize real-time monitoring of the production progress, process quality, and material consumption in production areas such as a production workshop, a power and energy workshop, an auxiliary material warehouse, and a finished product warehouse. When the production process monitoring system detects an abnormality, it may issue an alarm according to preset settings, thereby helping a production command and dispatch department of an enterprise perform production coordination and rational dispatch, and improving the rapid response ability of production. In addition, on the basis of production process monitoring, the MES system organizes and coordinates production according to the production process characteristics of various industries, tracks production process data, and assesses various production indicators; and through data analysis, optimizes the production process, realizes plan preparation and tracking, production data analysis, assessment management, and the like. Managers are capable of grasping the input and output of the entire factory in real time and optimizing production decisions, thereby minimizing production time, reducing errors, and reducing costs related to manual and repeated data entry as much as possible. The main functions include production plan management, production organization, workshop assessment and personnel management, production data analysis, and other subsystems.

It should be further noted that in the embodiment of the present disclosure, the automatic remodeling of the cart to be tested mainly refers to automatic switching of formulas. For calling of formulas, not only the manual selection function is retained, but also an automatic issuing function of the MES system is added. Data security can be improved by distributing target blueprint information through the MES system.

In this way, after reading the current blueprint information of the cart to be tested and the target blueprint information issued by the MES system through the RFID, the current blueprint information and the target blueprint information may be matched for consistency. If the two are consistent, the cart to be tested may be released directly; and if the two are inconsistent, the cart to be tested needs to be remodeled automatically, or requires switching the formula automatically.

S603: Control, when the current blueprint information is inconsistent with the target blueprint information, a jacking mechanism to perform positioning and jacking actions on the cart to be tested, and then send a control instruction to a robot; wherein the control instruction is used for controlling a gripper mechanism arranged on the robot to perform a pick-and-place action on at least one position-limiting block on the tray.

It should be noted that, in the embodiment of the present disclosure, the tray is located on the upper surface of the cart to be tested. In the transfer process of the cart to be tested, the at least one position-limiting block has the function of position-limiting and supporting the component to be transferred. In other words, the at least one position-limiting block can not only limit the position of the component to be transferred on the tray, but also play a role in supporting the component to be transferred on the tray.

It should be further noted that in the embodiment of the present disclosure, the formula may be used to memorize the position-limiting block position. In this way, the automatic switching of the formula here specifically refers to automatic replacement of the position-limiting block position according to the target blueprint information corresponding to the formula, so as to realize the automatic remodeling of the cart to be tested.

It should be further noted that in the embodiment of the present disclosure, the jacking mechanism may include a position-limiting assembly, a positioning assembly, and a jacking assembly. Before the controller sends a control instruction to the robot, for the positioning action of the jacking mechanism, referring to Fig. 7, the method may include:
S701: Control the position-limiting assembly on the jacking mechanism to perform a position-limiting action.
S702: When the current blueprint information is inconsistent with the target blueprint information, control the positioning assembly to perform a positioning action, and control the jacking assembly to perform a jacking action.

In some embodiments, the position-limiting assembly is used for limiting the position of the cart to be tested relative to the jacking mechanism. When the cart to be tested reaches the preset position, the controller controls the position-limiting assembly on the jacking mechanism to perform the position-limiting action so that the cart to be tested stays at the preset position.

For example, the position-limiting assembly may include a position-limiting driving member and a position-limiting member. The position-limiting driving member may be a front-and-rear clamping cylinder fixed on the jacking mechanism, and the position-limiting member is a cart clamping mechanism (or referred to as a "cart clamping block") connected to the front-and-rear clamping cylinder. In this way, when the cart to be tested reaches the preset position, the front-and-rear clamping cylinder may be extended to drive the cart clamping mechanism to clamp the cart to be tested, thereby controlling the cart to be tested to stay at the preset position to realize rough positioning of the cart to be tested.

Furthermore, if the current blueprint information is inconsistent with the target blueprint information, the cart to be tested still needs to be precisely positioned. Specifically, the controller controls the positioning assembly to perform the positioning action, and controls the jacking assembly to perform the jacking action, so as to complete the positioning and jacking actions of the jacking mechanism on the cart to be tested.

For example, the positioning assembly may be a positioning pin cylinder fixed on the jacking mechanism, and the jacking assembly may be a jacking cylinder fixed on the jacking mechanism. In this way, if the current blueprint information is inconsistent with the target blueprint information, that is, it is determined that the cart to be tested needs to be remodeled, the controller controls the positioning pin cylinder to extend, and the jacking cylinder is jacked, that is, the cylinder action is completed, thereby achieving precise positioning of the cart to be tested.

It should be further noted that in the embodiment of the present disclosure, in order to reduce the difficulty in debugging, before the controller sends the control instruction to the robot, it is also necessary to control the driving member to perform a first driving action, so as to drive the transmission member to move to an initial position.

In some embodiments, the driving member may include a first driving member arranged in a jacking sleeve assembly on the jacking mechanism, and the transmission member may include a transverse transmission member arranged in the tray. Referring to Fig. 7, the method further includes:
S703: Control the jacking sleeve assembly on the jacking mechanism to perform a nut recognition action so that the first driving member is connected to the transverse transmission member through a first connecting member in the jacking sleeve assembly, and control the first driving member to drive the first connecting member to rotate, so as to drive, through the first connecting member, the transverse transmission member to move to an initial position of the transverse transmission member.

In the embodiment of the present disclosure, the first driving member may be a first servo motor, and the first connecting member may be a first screwdriver bit (or referring to a first sleeve). In other words, the jacking sleeve assembly may include the first servo motor and the first screwdriver bit connected to a rotation shaft of the first servo motor. In addition, the transverse transmission member may be a first lead screw, and the transverse transmission member extends in the first direction.

In this way, the controller may control a sleeve cylinder on the jacking mechanism to extend and perform a nut recognition function so that the first screwdriver bit is aligned with the first lead screw. Specifically, the entire jacking sleeve assembly may be moved in a direction of the axial direction of the rotation shaft towards a direction close to the first lead screw, so that the first screwdriver bit and the first lead screw are sleeved. Then the controller controls the first servo motor to drive the first screwdriver bit to rotate, so as to drive, through the first screwdriver bit, the first lead screw to move to an initial position of the first lead screw.

Further, the driving member may also include a second driving member arranged in the gripper sleeve assembly on the gripper mechanism, and the transmission member may further include a longitudinal transmission member arranged in the tray. In some embodiments, referring to Fig. 7, the method further includes:
S704: Start the robot and control the robot to move from the first position to the second position.
S705: Control the gripper sleeve assembly on the gripper mechanism to perform a nut recognition action so that the second driving member is connected to the longitudinal transmission member through a second connecting member in the gripper sleeve assembly, and control the second driving member to drive the second connecting member to rotate, so as to drive, through the second connecting member, the longitudinal transmission member to move to an initial position of the longitudinal transmission member.

In the embodiment of the present disclosure, the second driving member may be a second servo motor, and the second connecting member may be a second screwdriver bit (or referring to a second sleeve). In other words, the gripper sleeve assembly may include the second servo motor and the second screwdriver bit connected to a rotation shaft of the second servo motor. In addition, the longitudinal transmission member may be a second lead screw, and the longitudinal transmission member extends in the second direction.

Here, there is an included angle between the first direction and the second direction. For example, the first direction is the horizontal axis direction, and the second direction is the vertical axis direction. At this time, the included angle between the first direction and the second direction is 90 degrees.

In the embodiment of the present disclosure, a first position of the robot is an origin of the robot, and a second position of the robot is a rotation working position of the longitudinal transmission member. In other words, if the controller allows the second driving member to work, the robot needs to be started first and then moved to the rotation working position of the second lead screw.

In this way, the controller may control a sleeve on the gripper mechanism to perform a nut recognition function so that the second screwdriver bit is aligned with the second lead screw. Specifically, the entire gripper sleeve assembly is capable of being moved in a direction of the axial direction of the rotation shaft towards the second lead screw, so that the second screwdriver bit and the second lead screw are sleeved. Then the controller controls the second servo motor to drive the second screwdriver bit to rotate, so as to drive, through the second screwdriver bit, the second lead screw to move to an initial position of the second lead screw.

In some embodiments, in order to play a role in error-proofing and fool-proofing of the position-limiting block position, the target blueprint information issued by the MES system may also be used to make error-proof and fool-proof judgments. Specifically, before sending the control instruction to the robot, the method further includes: receiving a position-limiting block position fed back by the robot; sending the control instruction to the robot if the position-limiting block position fed back by the robot is consistent with the position-limiting block position in the target blueprint information; wherein the position-limiting block position indicates a hole site serial number corresponding to the position-limiting block to be picked and placed by the robot.

In the embodiment of the present disclosure, the controller may notify the gripper mechanism of the robot to pick the position-limiting block with a certain hole site serial number based on the position-limiting block position in the target blueprint information; and before picking, the robot may further provide feedback to the controller the current hole site serial number to be picked. Then, consistency calibration is performed. Only when the two are consistent, the controller sends the control instruction to the robot, which prevents the robot from picking a position-limiting block with a wrong hole site serial number.

In some embodiments, if the hole site serial number fed back by the robot is consistent with the hole site serial number in the target blueprint information, the controller may send a control instruction to the robot at this time. Specifically, it may include:
sending a photographing instruction to the robot, wherein the photographing instruction is used for controlling a visual detection system arranged on the robot to take photographs of a site to be picked and a site to be placed, and performing offset compensation on positions of the site to be picked and the site to be placed; and
sending a pick-and-place instruction to the robot, wherein the pick-and-place instruction is used for controlling the gripper mechanism to pick the position-limiting block on the tray from the site to be picked, and controlling the gripper mechanism to place the position-limiting block into the site to be placed in the tray, so that the position of at least one position-limiting block conforms to the corresponding position-limiting block position in the target blueprint information.

In the embodiment of the present disclosure, the visual detection system is specifically arranged on the gripper mechanism of the robot. The visual detection system is a structure including a CCD camera, and therefore, the visual detection system may be referred to as a "CCD camera", or also may be referred to as a "gripper camera".

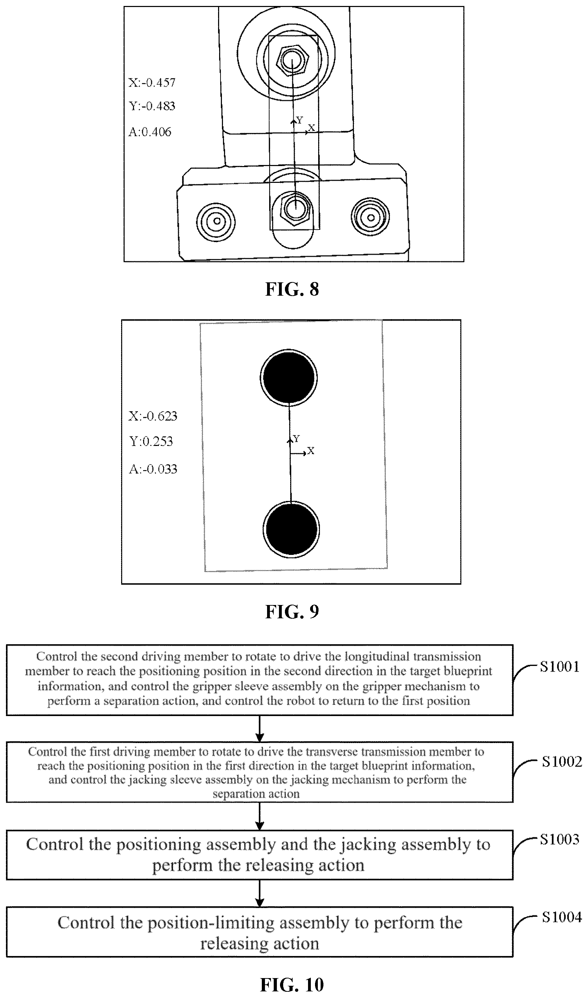

In a specific embodiment, for the gripper mechanism picking the position-limiting block from the site to be picked, the specific method may be as follows: after the visual detection system on the robot is moved to a photographing position of the site to be picked, the controller may send the first photographing instruction to the robot; wherein the first photographing instruction is used for instructing the visual detection system to take a photograph of the site to be picked; after the visual detection system completes the photographing of the site to be picked, the visual detection system is controlled to calculate according to the photographed first image, so as to determine a first offset of the site to be picked; then an initial position of the site to be picked is compensated based on the first offset to determine a target position of the site to be picked; and then the controller sends a first picking instruction to the robot to control the gripper mechanism to move to the site to be picked, and after moving to the target position of the site to be picked, the gripper mechanism is controlled based on the first picking instruction to pick the position-limiting block on the site to be picked. For example, Fig. 8 is a schematic structural top view of a site to be picked according to an embodiment of the present application. As shown in Fig. 8, the first offset at this time may include: an offset in an X-axis direction being -0.457, an offset in a Y-axis direction being -0.483, and an angle offset being 0.406.

In another specific embodiment, for the gripper mechanism placing the position-limiting block to the site to be placed, the specific method may be as follows: after the visual detection system on the robot is moved to a photographing position of the site to be placed, the controller may send the second photographing instruction to the robot; wherein the second photographing instruction is used for instructing the visual detection system to take a photograph of the site to be placed; after the visual detection system completes the photographing of the site to be placed, the visual detection system is controlled to calculate according to the photographed second image, so as to determine a second offset of the site to be placed; then an initial position of the site to be placed is compensated based on the second offset to determine a target position of the site to be placed; and then the controller sends a first placing instruction to the robot to control the gripper mechanism to move to the site to be placed, and after moving to the target position of the site to be placed, the gripper mechanism is controlled based on the first placing instruction to place the position-limiting block to the site to be placed. For example, Fig. 9 is a schematic structural top view of a site to be placed according to an embodiment of the present application. As shown in Fig. 9, the second offset at this time may include: an offset in an X-axis direction being -0.623, an offset in a Y-axis direction being 0.253, and an angle offset being -0.033.

Through the above embodiment, since the robot is provided with the gripper mechanism and the visual detection system, the controller can control the visual detection system to perform visual guide for offset correction on the picking position or placing position, and is capable of accurately determining, according to the corresponding offset data, a target position that the gripper assembly in the gripper mechanism intends to reach, so that according to the determined target position, the controller can control the gripper assembly to move to the target position, and therefore, the gripper assembly can move to the accurate picking position or placing position to perform pick-and-place on the position-limiting block.

S604: Determine, when a position of the at least one position-limiting block matches a position-limiting block position in the target blueprint information, that remodeling of the cart to be tested is successful, and control the jacking mechanism to perform a releasing action to release the cart to be tested.

It should be noted that, in the embodiment of the present disclosure, after determining that the remodeling of the cart to be tested is successful, it further needs to control the driving member to perform a second driving action to drive the transmission member to move to an axial positioning position in the target blueprint information. The second driving action may be a reverse action of the first driving action. For example, the first driving action instructs the driving member to drive the transmission member to move in a first axial direction, and the second driving action instructs the driving member to drive the transmission member to move in an opposite direction of the first axial direction.

In some embodiments, after determining that the remodeling of the cart to be tested is successful, the driving member is controlled to perform the second driving action to drive the transmission member to return to the axial positioning position in the target blueprint information. Referring to Fig. 10, the method may include:
S1001: Control the second driving member to rotate to drive the longitudinal transmission member to reach the positioning position in the second direction in the target blueprint information, and control the gripper sleeve assembly on the gripper mechanism to perform a separation action, and control the robot to return to the first position.
S1002: Control the first driving member to rotate to drive the transverse transmission member to reach the positioning position in the first direction in the target blueprint information, and control the jacking sleeve assembly on the jacking mechanism to perform the separation action.

It should be further noted that in the embodiment of the present disclosure, the axial positioning position includes a positioning position in the first direction and a positioning position in the second direction. For example, the positioning position in the first direction may be the X-axis positioning position, and the positioning position in the second direction may be the Y-axis positioning position.

In this way, if all of the at least one position-limiting block is successfully remodeled, first the gripper sleeve assembly of the robot performs the nut recognition action, then the second driving member (that is, the second servo motor) performs absolute position positioning so that the second lead screw moves to the Y-axis positioning position of the target blueprint information, and then the gripper sleeve assembly is controlled to perform the separation action to separate the second lead screw from the corresponding screwdriver bit; and after the second lead screw moves in place, it is necessary to control the robot to return to the first position (that is, the origin of the robot). Immediately afterwards, the first driving member (that is, the first servo motor) performs absolute position positioning to move the first lead screw to the X-axis positioning position of the target blueprint information, and then the jacking sleeve assembly is controlled to perform the separation action so that the first lead screw is separated from the corresponding screwdriver bit.

Further, after the transmission member returns to the axial positioning position of the target blueprint information, it is also necessary to control the jacking mechanism to perform the releasing action. In some embodiments, referring to Fig. 10, the method further includes:
S1003: Control the positioning assembly and the jacking assembly to perform the releasing action.
S1004: Control the position-limiting assembly to perform the releasing action.

It should be noted that in the embodiment of the present disclosure, after the cart to be tested is successfully remodeled, when the jacking mechanism is controlled to perform the releasing action, it may include: controlling the positioning assembly, the jacking assembly, and the position-limiting assembly to respectively perform the releasing action, that is, controlling a positioning pin cylinder on the jacking mechanism to retract and a jacking cylinder to retract, and then controlling the front-and-rear cylinder on the jacking mechanism to retract, so as to release the cart to be tested.

It should be further noted that in the embodiment of the present disclosure, when the cart to be tested is released, it may also include: clearing station data, and pulling the cart to be tested away from the station by the AGV.

It should be further noted that in the embodiment of the present disclosure, before the cart to be tested is released, it is also necessary to confirm that the electronic tag has been updated to the target blueprint information. In some embodiments, the method may further include:
writing the target blueprint information to the electronic tag on the cart to be tested through the reader/writer;
reading newly written blueprint information of the electronic tag through the reader/writer; and
allowing the cart to be tested to be released if the newly written blueprint information is consistent with the target blueprint information.

In other words, after the cart to be tested is successfully remodeled, the target blueprint information may also be written into the electronic tag on the cart to be tested, then the newly written blueprint information may be re-identified through the RFID, and the newly written blueprint information may be verified together with the target blueprint information issued by the MES system. If the two are consistent, it is confirmed that the electronic tag is written successfully, and the cart to be tested is allowed to be released.

In some embodiments, when the current blueprint information is consistent with the target blueprint information, the method further includes: controlling the jacking mechanism to perform a releasing action to release the cart to be tested.

In the embodiment of the present disclosure, when the jacking mechanism is controlled to perform the releasing action, it may include: controlling the position-limiting assembly to perform the releasing action, that is, controlling the front-and-rear cylinder on the jacking mechanism to retract, so as to release the cart to be tested.

The present embodiment provides a cart remodeling control method, specifically an automatic cart remodeling control solution that can automatically select the corresponding formula, automatically identify the cart type, and visually correct deviations, and is error-proof and fool-proof. When the current blueprint information recognized by the electronic tag arranged on the cart to be tested is inconsistent with the target blueprint information issued by the manufacturing execution system, it is determined to perform remodeling automatically, specifically: the controller controls the jacking mechanism to perform positioning and jacking actions on the cart to be tested, and then the robot controls the gripper mechanism to perform a pick-and-place action on at least one position-limiting block on the tray; and when the position of the at least one position-limiting block matches the position-limiting block position in the target blueprint information, it is determined that the remodeling of the cart to be tested is successful, and the cart is released. In this way, on the one hand, the blueprint information may be automatically issued by the manufacturing execution system and recognized through the electronic tag, which improves the data security; on the other hand, remodeling performed on the cart has been changed from manual replacement to automatic replacement, and the robot is simple in a remodeling logic, there is no need to configure a plurality of sensors, and it further improves the degree of automation of the devices, while reducing the labor costs and production costs, thereby improving the production efficiency during product remodeling. In still another aspect, controlling the lead screw displacement in the tray and performing the pick-and-place action on the at least one position-limiting block on the tray can also adapt to components to be transferred with different specifications and parameters, thereby improving the compatibility.

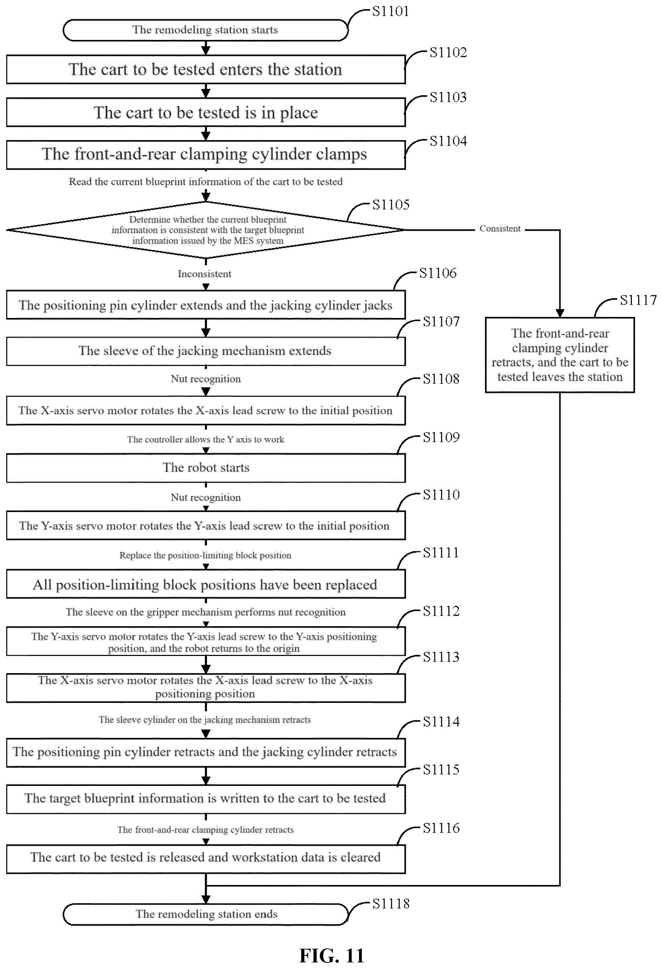

In still another embodiment of the present disclosure, the cart remodeling control method based on the previous embodiment, taking the pack cart as an example, is mainly applied in the field of pack automatic assembling, especially the automatic remodeling station of the pack cart. Referring to Fig. 11, which is a schematic detailed flowchart of a cart remodeling control method according to an embodiment of the present application. As shown in Fig. 11, the detailed process may include:
S1101: The remodeling station starts.
S1102: The cart to be tested enters the station.
S1103: The cart to be tested is in place.
S1104: The front-and-rear clamping cylinder clamps.
S1105: It is determined whether the current blueprint information is consistent with the target blueprint information issued by the MES system.
S1106: The positioning pin cylinder extends and the jacking cylinder jacks.
S1107: The sleeve of the jacking mechanism extends.
S1108: The X-axis servo motor rotates the X-axis lead screw to the initial position.
S1109: The robot starts.
S1110: The Y-axis servo motor rotates the Y-axis lead screw to the initial position.
S1111: All position-limiting block positions have been replaced.
S1112: The Y-axis servo motor rotates the Y-axis lead screw to the Y-axis positioning position, and the robot returns to the origin.
S1113: The X-axis servo motor rotates the X-axis lead screw to the X-axis positioning position.
S1114: The positioning pin cylinder retracts and the jacking cylinder retracts.
S1115: The target blueprint information is written to the cart to be tested.
S1116: The cart to be tested is released and workstation data is cleared.
S1117: The front-and-rear clamping cylinder retracts, and the cart to be tested leaves the station.
S1118: The remodeling station ends.

It should be noted that in the embodiment of the present disclosure, for S1105, if the judgment result is consistent, S1117 is performed, that is, the front-and-rear clamping cylinder retracts, and the cart to be tested leaves the station; and if the judgment result is inconsistent, S1106 to S1116 are performed until the cart to be tested is released and the station data is cleared.

It should be noted that in the embodiment of the present disclosure, an automatic cart remodeling control solution that can realize rapid cutting and pulling functions is provided here, which may realize, by controlling the robot through the PLC, multi-functional system controls on the cart to be tested such as lead screw pitch change, position-limiting block replacement, and automatic formula switching. The rapid cutting and pulling functions are mainly reflected in: on the one hand, the manual replacement of the position-limiting block is changed to the automatic replacement by the robot; on the other hand, the formula modification is changed to automatically issuing the target blueprint information by the MES system.

It should be further noted that in the embodiment of the present disclosure, the position-limiting block may also be referred to as the positioning block, which use a polyoxymethylene (POM) material, and therefore, the position-limiting block may also be referred to as a "POM block".

In some embodiments, based on Fig. 11, specific operations of the cart remodeling control method are as follows:
Step 1: The AGV sends an entry request to the PLC, and after the PLC allows entry, the AGV pulls the cart to be tested into the remodeling station.
Step 2: After the AGV is in place, the front-and-rear clamping cylinder on the jacking mechanism is clamped to achieve preliminary positioning of the cart to be tested.
Step 3: A read-write head of the electronic tag reads the current blueprint information of the cart to be tested and sends it to the PLC for matching with the target blueprint information issued by the MES system.
Step 4: It is determined whether the current blueprint information read by the PLC through the electronic tag is consistent with the target blueprint information issued by the MES system. If the current blueprint information read by the PLC through the electronic tag is inconsistent with the target blueprint information issued by the MES system, it indicates that the cart to be tested needs to be remodeled; and on the contrary, if they are consistent, it indicates that the cart to be tested does not need to be remodeled.
Step 5: When the current blueprint information read by the PLC through the electronic tag is inconsistent with the target blueprint information issued by the MES system, the PLC controls the positioning pin cylinder on the jacking mechanism to extend and the jacking cylinder to jack, that is, the cylinder action is completed to achieve precise positioning of the cart to be tested.
Step 6: The PLC controls the upper sleeve cylinder of the jacking mechanism to extend and perform the nut recognition function to align the first screwdriver bit with the first lead screw. For example, the PLC controls the X-axis servo motor to rotate the screwdriver bit to perform nut recognition, which may be rotating clockwise by 10%, so that the screwdriver bit is aligned with the first lead screw. The X-axis servo motor rotates the first lead screw to return to the original position at a high speed, and the X-axis servo motor rotates the first lead screw to return to the zero position at a low speed.
Step 7: When the PLC allows the Y-axis to work, the robot starts and moves to the second lead screw rotation station, and the Y-axis sleeve performs the nut recognition function to align the second screwdriver bit with the second lead screw. The Y-axis servo motor rotates the second lead screw to return to the original position at a high speed, and the Y-axis servo motor rotates the second lead screw to return to the zero position at a low speed.
Step 8: The PLC determines whether the hole site number in the target blueprint information is consistent with the hole site number fed back by the robot, and when the two are consistent, the gripper mechanism of the robot performs a pick-and-place action on the position-limiting block.
Step 9: When the position-limiting blocks are all successfully remodeled according to the corresponding target blueprint information, the sleeve on the gripper mechanism of the robot performs nut recognition, the Y-axis servo motor performs absolute position positioning, and after being in place, the robot completes its work and returns to the origin.
Step 10: The X-axis servo motor performs absolute position positioning, and after reaching the position, the sleeve cylinder on the jacking mechanism retracts.
Step 11: The positioning pin cylinder retracts, and the jacking cylinder retracts; then the target blueprint information after the remodeling is electronically written, and verification reading is performed again to match with the target blueprint information issued by the MES system.
Step 12: The front-and-rear cylinder on the jacking mechanism retracts, the cart to be tested is released, and the station data is cleared.

The embodiment of the present disclosure provides an automatic pack cart remodeling control solution that can automatically select the corresponding formula, automatically identify the cart type, and visually correct deviations, and is error-proof and fool-proof. On the one hand, the formula may be matched with the blueprint information issued by the MES system and the blueprint information read by the electronic tag. If they are consistent, automatic releasing is performed; and if they are inconsistent, automatic remodeling is performed. On the other hand, the manual replacement is changed to automatic replacement, the robot is simple in the remodeling logic and is fully automated and unattended, and the replacement of the position-limiting block position may be identified, determined, and guided by the visual detection system. On the other hand, the structure is simple and the logic is clear, and there is no need to configure a plurality of sensors. In still another aspect, while retaining the manual selection function when calling the formula, the automatic issuing function of the MES system is added. In yet another aspect, the front-and-rear workstations and the pack cart remodeling station operate in parallel, which greatly improves the efficiency. That is, in multi-station production, there is no need to wait for the cart remodeling time. In yet another aspect, using the servo motor to rotate the lead screw to change the pitch and replace the position-limiting block position is capable of adapting to all box body sizes of existing products and has good compatibility.

In the embodiment of the present disclosure, the offset data is provided through the visual detection system on the robot, as shown in Fig. 8 and Fig. 9 specifically, the position-limiting block position may also be automatically identified and corrected based on vision, which is capable of adapting to different blueprint information, sizes, heights, and other requirements, which improves the production efficiency during product remodeling.

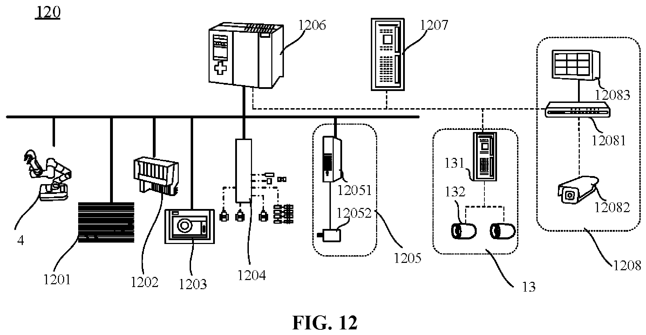

In some embodiments, Fig. 12 is a schematic diagram of a network framework of an automatic remodeling station according to an embodiment of the present disclosure. As shown in Fig. 12, the network framework 120 may include the robot 4, a valve island 1201, a distributed input and output module 1202, a visualization device 1203, a remote input and output module 1204, a servo controller 1205, a PLC controller 1206, an MES server 1207, a visual detection system 13, and a video monitoring system 1208. The robot 4 may be a six-axis robot, and the visualization device 1203 may be a Human Machine Interface (HMI) device.

In Fig. 12, the servo controller 1205 includes a servo driver 12051 and a servo motor 12052. The PLC controller 1206 may drive, through the servo driver 12051, the servo motor 12052 to work.

In Fig. 12, the visual detection system 13 includes a visual host 131 and a CCD camera 132. The PLC controller 1206 may send a photographing instruction to the CCD camera 132 through the visual host 131.

In Fig. 12, the video monitoring system 1208 includes a monitoring host 12081, a camera 12082, and a monitor 12083. The PLC controller 1206 may also control, through the monitoring host 12081, the camera 12082 to rotate and send the photographing instruction. The captured image may be displayed on the monitor 12083.

It should be noted that the thick black line in Fig. 12 represents an automation bus (Profinet) communication method, the dotted line in Fig. 12 represents an Ethernet bus (Ethernet) communication method, and the dashed line in Fig. 12 represents a Universal Serial Bus (USB)/serial communication method.

It should be further noted that the PLC controller 1206 is based on the Profinet communication method and may communicate with the robot 4, the valve island 1201, the distributed input and output module 1202, the visualization device 1203, the remote input and output module 1204, and the servo controller 1205. The PLC controller 1206 is based on the Ethernet communication method and may communicate with the MES server 1207, the visual detection system 13, and the video monitoring system 1208.

For example, for the automatic remodeling station, protocol methods included in the network topology may be seen in Table 1 for details.

**Table 1**

| MES server to stay server | Open protocol |
|---|---|
| Device server to station (PLC or station PC) | S7 protocol or open protocol |
| Station to AGV server | S7 protocol or open protocol |
| AGV server to AGV | Wireless communication |

Here, only the open protocol is used between the MES server and the stay server, while the S7 protocol or open protocol may be used from the device server to the station, or from the station to the AGV server. The S7 protocol is a communication protocol integrated within the Siemens S7 series PLC. It is a specially optimized communication protocol that runs on the transport layer (session layer/presentation layer/application layer). Its information transmission may be based on a parallel computing communication protocol (Message Passing Interface, MPI) network, a PROcess FIeld BUS (PROFIBUS) network, or the Ethernet. In other words, the S7 protocol is the standard protocol used for communication between Siemens S7 series products. Its advantage is that both communicating parties may establish communication through the S7 protocol whether they are on the same MPI bus, the same PROFIBUS bus, or the same industrial Ethernet.

Through the above embodiments, the specific implementation of the foregoing embodiments is elaborated in detail. It can be seen that through the technical solutions of the foregoing embodiments, the technical solutions of the embodiments of the present disclosure may make the device more automated (from manual replacement to machine replacement), data security is improved (blueprint information is issued through the MES system and electronic label identification), the efficiency is higher (manpower and cycle time of remodeling are reduced), and the compatibility is better (by controlling the pitch change of the lead screw in the tray and performing the pick-and-place action on the at least one position-limiting block on the tray, the components to be transferred with different specifications and parameters are capable of being adapted).

It should be further noted that, in the present disclosure, the term "include", "comprise", or other variations thereof are intended to cover non-exclusive including, so that a process, a method, an article, or an apparatus including a series of elements not only includes the elements, but also includes other elements not clearly listed, or further includes inherent elements of the process, method, article, or apparatus. In a case without any more limitations, an element defined by "including a..." does not exclude that the process, method, article, or apparatus including the element further has other identical elements.

The serial numbers of the embodiments of the present invention are merely used for description, and do not imply the preference among the embodiments.

The methods disclosed in several method embodiments provided in the present disclosure may be combined arbitrarily without conflict to obtain new method embodiments.

The features disclosed in several product embodiments provided in the present disclosure may be combined arbitrarily without conflict to obtain new product embodiments.

The features disclosed in several method or device embodiments provided in the present disclosure may be combined arbitrarily without conflict to obtain new method embodiments or device embodiments.

The above descriptions are merely specific embodiments of the present disclosure, the protection scope of the present disclosure is not limited thereto, and variations or replacements that can easily derived by those skilled in the art without departing from the technical scope disclosed in the present disclosure shall fall within the protection scope of the present disclosure.

### Industrial Applicability

In the embodiment of the present disclosure, through the above technical means, when the cart to be tested reaches the preset position, the current blueprint information of the cart to be tested is matched with the target blueprint information for consistency; if the current blueprint information is inconsistent with the target blueprint information, it is determined to perform remodeling automatically for the cart to be tested, specifically: first, control the jacking mechanism to perform positioning and jacking actions on the cart to be tested, and then send the control instruction to the robot to control the gripper mechanism arranged on the robot to perform the pick-and-place action on the at least one position-limiting block on the tray; and when the position of the at least one position-limiting block matches the position-limiting block position in the target blueprint information, determine that the remodeling of the cart to be tested is successful. In this way, not only corresponding target blueprint information can be automatically selected according to components to be transferred with different specifications and parameters, thereby improving the data security; but also in a product matching process, the position-limiting block has been changed from manual replacement to automatic replacement, and the robot is simple in a remodeling logic, there is no need to configure a plurality of sensors, and it further improves the degree of automation of the devices, while reducing the labor costs and production costs, thereby improving the production efficiency during product matching. In addition, performing the pick-and-place action on the at least one position-limiting block on the tray is also capable of enabling it to adapt to components to be transferred with different specifications and parameters, thereby improving the compatibility.

## Claims

1. A cart remodeling control method, comprising:
acquiring, when a cart to be tested reaches a preset position, current blueprint information of the cart to be tested; wherein a tray is placed on an upper surface of the cart to be tested, and at least one position-limiting block is arranged on the tray;
receiving target blueprint information sent by a manufacturing execution system, and matching the current blueprint information with the target blueprint information for consistency;
controlling, when the current blueprint information is inconsistent with the target blueprint information, a jacking mechanism to perform positioning and jacking actions on the cart to be tested, and then sending a control instruction to a robot; wherein the control instruction is used for controlling a gripper mechanism arranged on the robot to perform a pick-and-place action on at least one position-limiting block on the tray; and
determining, when a position of the at least one position-limiting block matches a position-limiting block position in the target blueprint information, that remodeling of the cart to be tested is successful, and controlling the jacking mechanism to perform a releasing action to release the cart to be tested.

2. The method according to claim 1, wherein before the cart to be tested reaches the preset position, the method further comprises:
receiving an entry request sent by an automated guided vehicle; and
sending, based on the entry request, an entry permit instruction to the automated guided vehicle; wherein the entry permit instruction is used for instructing the automated guided vehicle to pull the cart to be tested to move until the cart to be tested reaches the preset position.

3. The method according to claim 1 or 2, wherein before sending the control instruction to the robot, the method further comprises:
receiving a position-limiting block position fed back by the robot; and
sending the control instruction to the robot if the position-limiting block position fed back by the robot is consistent with the position-limiting block position in the target blueprint information; wherein the position-limiting block position indicates a hole site serial number corresponding to the position-limiting block to be picked and placed by the robot.

4. The method according to any one of claims 1 to 3, wherein sending the control instruction to the robot comprises:
sending a photographing instruction to the robot, wherein the photographing instruction is used for controlling a visual detection system arranged on the robot to take photographs of a site to be picked and a site to be placed, and performing offset compensation on positions of the site to be picked and the site to be placed; and
sending a pick-and-place instruction to the robot, wherein the pick-and-place instruction is used for controlling the gripper mechanism to pick the position-limiting block on the tray from the site to be picked, and controlling the gripper mechanism to place the position-limiting block into the site to be placed in the tray, so that the position of the at least one position-limiting block conforms to the corresponding position-limiting block position in the target blueprint information.

5. The method according to any one of claims 1 to 4, wherein after determining that the remodeling of the cart to be tested is successful, the method further comprises:
writing the target blueprint information to an electronic tag on the cart to be tested through a reader/writer;
reading, through the reader/writer, newly written blueprint information of the electronic tag; and
allowing the cart to be tested to be released if the newly written blueprint information is consistent with the target blueprint information.

6. The method according to any one of claims 1 to 5, wherein when the cart to be tested reaches the preset position, the method further comprises:
controlling a position-limiting assembly on the jacking mechanism to perform a position-limiting action so that the cart to be tested stays at the preset position; wherein the position-limiting assembly is used for limiting the position of the cart to be tested relative to the j acking mechanism.

7. The method according to claim 6, wherein the jacking mechanism further comprises a positioning assembly and a jacking assembly;
the controlling the jacking mechanism to perform positioning and jacking actions on the cart to be tested comprises: controlling the positioning assembly to perform the positioning action, and controlling the jacking assembly to perform the jacking action, so as to complete the positioning and jacking actions of the jacking mechanism on the cart to be tested; and
the controlling the jacking mechanism to perform a releasing action comprises: controlling the positioning assembly and the jacking assembly to perform the releasing action, and controlling the position-limiting assembly to perform the releasing action.

8. The method according to any one of claims 1 to 7, wherein before sending the control instruction to the robot, the method further comprises:
controlling a driving member to perform a first driving action to drive a transmission member to move to an initial position; and
correspondingly, after determining that the remodeling of the cart to be tested is successful, the method further comprises: controlling the driving member to perform a second driving action to drive the transmission member to move to a corresponding axial positioning position in the target blueprint information.

9. The method according to claim 8, wherein the driving member comprises a first driving member arranged in a jacking sleeve assembly on the jacking mechanism, and the transmission member comprises a transverse transmission member arranged in the tray; and the controlling the driving member to perform a first driving action to drive a transmission member to move to an initial position comprises:
controlling the jacking sleeve assembly on the jacking mechanism to perform a nut recognition action so that the first driving member is connected to the transverse transmission member through a first connecting member in the jacking sleeve assembly, and controlling the first driving member to drive the first connecting member to rotate, so as to drive, through the first connecting member, the transverse transmission member to move to an initial position of the transverse transmission member; wherein the transverse transmission member extends in a first direction.

10. The method according to claim 9, wherein the driving member comprises a second driving member arranged in a gripper sleeve assembly on the gripper mechanism, and the transmission member comprises a longitudinal transmission member arranged in the tray; and the controlling the driving member to perform a first driving action to drive a transmission member to move to an initial position further comprises:
starting the robot and controlling the robot to move from a first position to a second position; and
controlling the gripper sleeve assembly on the gripper mechanism to perform a nut recognition action so that the second driving member is connected to the longitudinal transmission member through a second connecting member in the gripper sleeve assembly, and controlling the second driving member to drive the second connecting member to rotate, so as to drive, through the second connecting member, the longitudinal transmission member to move to an initial position of the longitudinal transmission member; wherein the longitudinal transmission member extends in a second direction.

11. The method according to claim 10, wherein after determining that the remodeling of the cart to be tested is successful, the controlling the driving member to perform a second driving action to drive the transmission member to move to an axial positioning position in the target blueprint information comprises:
controlling the second driving member to rotate to drive the longitudinal transmission member to reach the positioning position in the second direction in the target blueprint information, and controlling the gripper sleeve assembly on the gripper mechanism to perform a separation action, and controlling the robot to return to the first position; and
controlling the first driving member to rotate to drive the transverse transmission member to reach the positioning position in the first direction in the target blueprint information, and controlling the jacking sleeve assembly on the jacking mechanism to perform the separation action.

12. A cart remodeling system, comprising:
a cart to be tested comprising a tray and at least one position-limiting block arranged on the tray;
a gripper mechanism capable of being installed on a mechanical arm of a robot and having a gripper assembly, the gripper assembly being used for picking or placing the position-limiting block; and
a jacking mechanism arranged at a remodeling station where remodeling of the cart to be tested is performed, wherein the jacking mechanism comprises a jacking bracket and a position-limiting assembly arranged on the jacking bracket, the position-limiting assembly being used for limiting a position of the cart to be tested relative to the jacking mechanism.

13. The cart remodeling system according to claim 12, wherein the jacking mechanism further comprises a jacking sleeve assembly; the jacking sleeve assembly comprises a first driving member, a first connecting member, and a first nut recognition assembly; wherein
the first nut recognition assembly is arranged on the jacking bracket; the first driving member is fixed on the first nut recognition assembly, and the first connecting member is drivingly connected to an output shaft of the first driving member;
driven by the first nut recognition assembly, the first connecting member is capable of moving in a direction close to the transverse transmission member in the tray and being connected to the transverse transmission member; and driven by the first driving member, the first connecting member is capable of driving the transverse transmission member to move.

14. The cart remodeling system according to claim 12 or 13, wherein the jacking mechanism further comprises a jacking assembly; the jacking assembly comprises a jacking driving member, a jacking transmission member, and a jacking beam; wherein
the jacking beam is slidably connected to the jacking bracket, for supporting the cart to be tested; one end of the jacking driving member is fixed to the jacking bracket, and the other end is connected to the jacking transmission member; the jacking transmission member is slidably arranged on the jacking bracket, and drivingly connected to the jacking beam; and when the jacking driving member drives the jacking transmission member to move, the jacking beam moves in a vertical direction under the action of the jacking transmission member.

15. The cart remodeling system according to any one of claims 12 to 14, wherein the gripper mechanism further comprises a gripper sleeve assembly; and the gripper sleeve assembly comprises a second driving member, a second connecting member, and a second nut recognition assembly; wherein
the second nut recognition assembly is arranged on the mechanical arm of the robot; the second driving member is fixed to the second nut recognition assembly, and the second connecting member is drivingly connected to an output shaft of the second driving member;
driven by the second nut recognition assembly, the second connecting member is capable of moving in a direction close to the longitudinal transmission member in the tray and is connected to the longitudinal transmission member; and driven by the second driving member, the second connecting member is capable of driving the longitudinal transmission member to move.

16. The cart remodeling system according to any one of claims 12 to 15, wherein the gripper mechanism further comprises a visual detection system, and the visual detection system is capable of being electrically coupled to a controller; the visual detection system is used for taking photographs of a site to be picked and a site to be placed, and performing offset compensation on positions of the site to be picked and the site to be placed.

17. The cart remodeling system according to any one of claims 12 to 16, wherein the position-limiting assembly comprises a position-limiting driving member and a position-limiting member; wherein
the position-limiting driving member is fixed on the jacking bracket, and the position-limiting member is connected to an output shaft of the position-limiting driving member; and driven by the position-limiting driving member, the position-limiting member is capable of being connected to the cart to be tested to limit the position of the cart to be tested relative to the jacking mechanism.
